(19) Europäisches Patentamt
European Patent Office
Office européen des brevets

(11) **EP 2 942 230 B1**

(12) **EUROPÄISCHE PATENTSCHRIFT**

(45) Veröffentlichungstag und Bekanntmachung des Hinweises auf die Patenterteilung:
**25.07.2018 Patentblatt 2018/30**

(51) Int Cl.:
***B60M 1/28*** *(2006.01)*

(21) Anmeldenummer: **15001352.2**

(22) Anmeldetag: **06.05.2015**

(54) **VERFAHREN ZUR MESSUNG DES ANHUBS ELEKTRISCHER FAHRLEITUNGEN AUF FAHRWEGEN DES SCHIENENGEBUNDENEN VERKEHRS**

METHOD FOR MEASURING THE UPLIFT OF ELECTRICAL CONTACT LINES ON RAIL LINES

PROCÉDÉ DE MESURE DE L'AMORÇAGE DES CATÉNAIRES ÉLECTRIQUES SUR DES VOIES DE TRAFIC FERROVIAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2014 DE 102014208734**

(43) Veröffentlichungstag der Anmeldung:
**11.11.2015 Patentblatt 2015/46**

(73) Patentinhaber: **Deutsche Bahn AG**
**10785 Berlin (DE)**

(72) Erfinder: **Schüßler, Stefan**
**83512 Reitmehring (DE)**

(74) Vertreter: **Zinken-Sommer, Rainer et al**
**Deutsche Bahn AG**
**HLM 4 - Patentabteilung**
**Richelstrasse 3**
**80634 München (DE)**

(56) Entgegenhaltungen:
DE-B4-102006 031 487    JP-A- 2009 055 778
JP-A- 2009 236 574      JP-A- 2010 111 366
KR-A- 20090 070 169

**Beschreibung**

Die Erfindung betrifft ein Verfahren zur Messung des Anhubs elektrischer Fahrleitungen auf Fahrwegen des schienengebundenen Verkehrs, wobei die Messung mit Hilfe einer optischen Erfassung durchgeführt wird.

Aus der DE 10 2006 031 487 B4 ist ein Verfahren zur Fahrdrahtanhubmessung bekannt. Der Anhub wird bei diesem Verfahren mit einer Kamera gemessen, ohne die Seitenbewegung des Fahrdrahts zu berücksichtigen. Auch die Gleisüberhöhung bleibt unberücksichtigt.

Die Nachteile dieses Verfahrens sind:

1. Die zulässigen Toleranzen laut EN50317 liegen bei +/-5 mm. Dies führt dazu, dass der Aufstellungsort der Sensoren auf einen sehr kleinen Winkelbereich gegenüber der Horizontalen begrenzt ist, wenn diese Toleranzen ohne Korrektur vom Seitenversatz eingehalten werden sollen.

2. Nach diesem Verfahren wird ein Fremdnormal (O) zur Kalibrierung der Anhubkamera benötigt. Der Anhub wird immer relativ zum Fremdnormal gemessen. Nachteilig ist, dass am Messort ein Objekt bekannter Größe in bekanntem Abstand gefunden werden muss. Es kann zum Beispiel ein genormtes Bauteil oder eine aufgestellte Kalibriertafel verwendet werden. Es wird kein vorkalibrierter Sensor verwendet.

3. Dieses Verfahren nutzt Näherungen, die zu einem unnötigen Messfehler führen. Insbesondere bei großen Anhubwerten oder ungünstigem Aufstellort kann sich dieser Fehler auf bis zu 50% der zulässigen Toleranz von 5mm summieren.

4. Inhomogenitäten im Abbildungssystem wie zum Beispiel die Linsenverzerrung bleiben unberücksichtigt. Je nach verwendeter Kamera kann dies zu relevanten Abweichungen bei der Anhubmessung führen.

5. Der seitliche Versatz (x) des Fahrdrahtes wird durch das vorliegende Verfahren nicht berücksichtigt, was ebenfalls zu großen Messfehlern führt. Dies drückt sich insbesondere durch die in diesem Verfahren durchgeführte Verwendung der Gleichung A= (O/O') x LA'/Cos (a) ausdrückt.

6. Die Größe und der Abstand des Kalibrierobjektes muss bei diesem Verfahren bekannt sein. Ist er nicht bekannt, kann das Verfahren nicht eingesetzt werden.

7. Es findet keine Berechnung der kinematischen Kurve des Seitenhalters bei Durchlauf des Stromabnehmers statt.

Der Aufstellort der Kameras kann aufgrund der topographischen Gegebenheiten vor Ort aber nicht frei gewählt werden. Eine nötige Bedingung ist zum Beispiel, dass man freie Sicht auf den Fahrdraht haben muss. Um eine automatisierte Auswertung zu ermöglichen, ist es vorteilhaft, wenn sich hinter dem Fahrdraht keine anderen Objekte, wie zum Beispiel Bäume, befinden. Man muss einen Sicherheitsabstand zum Gleis einhalten um außerhalb des Gefahrenbereiches zu sein. Der maximal mögliche Abstand zum Gleis ist oft durch Straßen oder das mögliche Auflösungsvermögen der Kamera beschränkt.

Weitere bekannte Verfahren zur Anhubmessung sind:

Von der Firma Sensys (Schweden) wurde im Rahmen des Europac Projekts ein Verfahren zur Anhubmessung vorgestellt, das den Fehler durch den Seitenversatz des Fahrdrahts nicht aufweist. Eine Kamera wird dazu ortsfest, zum Beispiel an einer Brücke, mittig über dem Gleis angebracht. Die Kamerablickrichtung ist von vorne auf den Stromabnehmer gerichtet. Wenn der Stromabnehmer an einem definierten Ort ist, wird das Bild des Stromabnehmers ausgewertet. An der Höhe der Schleifleiste im Bild kann die Höhe des Anhubs gemessen werden. Es wird noch die Ruhelage des Fahrdrahts unmittelbar vor oder nach der Messfahrt benötigt. Dazu müsste man einen definierten Punkt am Fahrdraht, zum Beispiel eine Klemme im Bild suchen und die Lage bestimmen. Dieses Verfahren hat zudem den Nachteil, dass die Kamera über dem Gleis montiert werden muss. Das ist aufwändig oder schränkt die Wahl des Messorts auf vorhandene Brücken ein. Zusätzlich wird ein Sensor zur Auslösung der Bildaufzeichnung benötigt. Beim System der Firma Sensys ist dies ein Radarsensor.

Es gibt eine ortsfeste Anhubmessanlage, die auf Seilzugsensoren basiert und von DB Systemtechnik entwickelt wurde. Dazu wird ein Seilzugsensor am Mast montiert. Über eine Umlenkrolle läuft das Seil zum Fahrdraht. Wird der Fahrdraht angehoben, zieht sich das Seil in den Sensor zurück. Dies ist der gesuchte Anhub.

Ein ähnliches Prinzip verwendet eine von der SNCF entwickelte Anlage, die mit rotatorischen Potentiometern arbeitet. Am Potentiometer ist ein Arm angebracht, der zum Fahrdraht führt. Ein Anhub am Fahrdraht führt zu einer Drehbewegung am Potentiometer.

Nachteilig an den Verfahren bei denen ein Sensor mit dem Fahrdraht verbunden werden muss ist, dass die Fahrleitung abgeschaltet und geerdet werden muss, um den Sensor einzubauen. Zusätzlich ist ein Turmtriebwagen oder eine Leiter zur Montage der Sensoren erforderlich. Während des Betriebes muss die Isolation vom Hochspannungspotenzial sichergestellt werden.

Der Erfindung liegt die Aufgabe zugrunde, ein Verfahren zu entwickeln, welches einen mobilen Einsatz erlaubt, in sehr kurzer Zeit auf und abgebaut werden kann, wobei die Messtechnik außerhalb des Gleises angeordnet wird und eine hohe Messgenauigkeit aufweist.

Dies wird erfindungsgemäß durch die Merkmale der Ansprüche 1 bis 13 erreicht.

Die erfindungsgemäße Lösung ist so ausgelegt, dass der Anhub ortsfest von außerhalb des Gefahrenbereichs des Gleises gemessen wird. Die Messeinrichtung kann schnell auf und abgebaut werden. Ein erfahrener Mitarbeiter benötigt für den Aufbau von zwei Messeinrichtungen für zwei Gleise ungefähr eine Stunde.

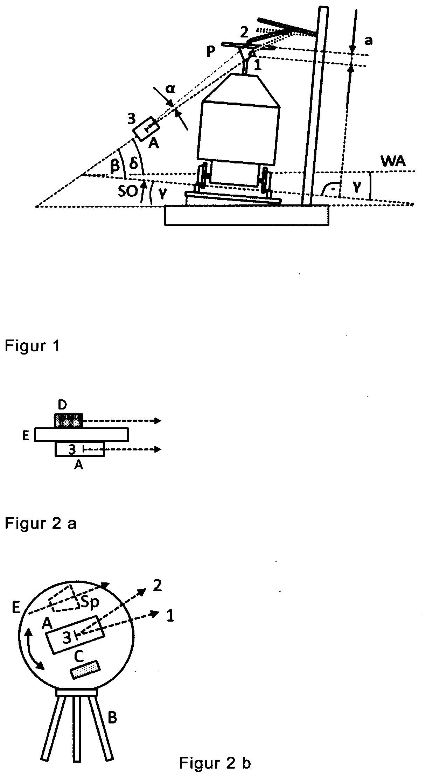

Die Messanordnung besteht aus folgenden Komponenten (siehe Figur 1 und 2a/b): Einem Sensor zur Erfassung der Auslenkung des Fahrdrahts (A). Der verwendete Sensor muss in der Lage sein, den Blickwinkel, unter dem der Fahrdraht bei Anhublage und Ruhelage erscheint zu ermitteln. Es kann zum Beispiel eine Kamera (A) mit Objektiv oder ein Laserscanner eingesetzt werden. Je nach Auslegung kommen verschiedene Wellenlängen für den Sensor in Betracht. Zum Beispiel sichtbares Licht, UV Strahlung, IR Strahlung, Mikrowellen, Radar oder Ultraschall. Der Neigungssensor (C) ist erforderlich, um die Neigung des Entfernungsmessers (D) beim Einmessen der Ruhelage zu ermitteln. Falls im Entfernungsmesser ein Neigungssensor integriert ist, kann der Neigungsmesser (C) entfallen. Die Neigungsverstelleinrichtung (E) dient dazu, den Anhubsensor auf den nötigen Messbereich auszurichten. Dies ist erforderlich, weil je nach Messstelle die Höhe des Fahrdrahts und der Abstand zum Gleis variieren. Vorteilhafter Weise ist diese Einrichtung so ausgeführt, dass sie von der Steuereinheit aus ansteuerbar ist. Mit dem Stativ (B) wird die Messeinrichtung waagrecht aufgestellt. Um das Einjustieren zu erleichtern kann am Stativ eine zusätzliche Nivelliereinrichtung mit Feintrieb vorhanden sein.

Um einen Betrieb bei Nacht zu ermöglichen kann an der Winkelverstelleinrichtung (E) ein Scheinwerfer (Sp) angebracht werden. Diese Anordnung hat den Vorteil, dass der Scheinwerfer stark gebündelt sein kann und gemeinsam mit der Kamera ausgerichtet wird.

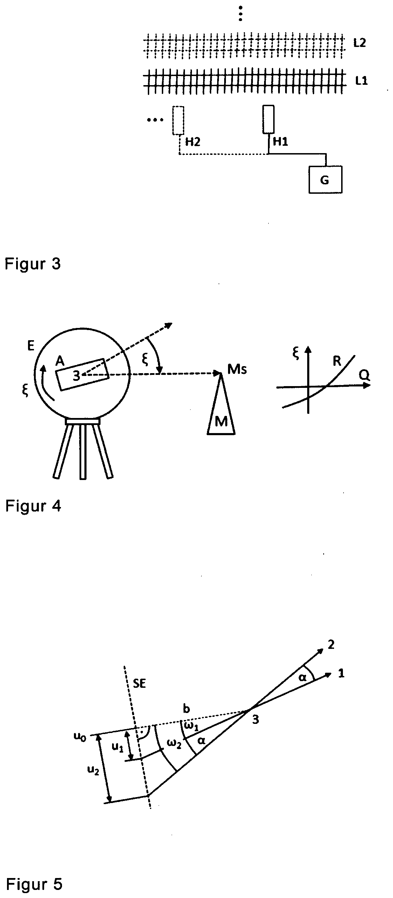

Das Anhubmessgerät (H1) wird neben der Strecke aufgestellt und mit der Auswerte- und Steuereinheit (G) verbunden (Figur 3).

Die Verbindung zwischen Steuergerät (G) und Anhubmessgerät (H) kann auch als Funkverbindung ausgeführt sein.

Da am Anhubmessgerät eine Winkelverstelleinrichtug (E) angebracht ist, kann ein Anhubsensor mit kleinem Öffnungswinkel und hoher Auflösung eingesetzt werden. Der Anhub kann wegen der Winkelverstelleinrichtung (E) mit einem einzigen Anhubmessgerät auch an mehreren Gleisen (L1, L2,...) wahlweise erfasst werden.

Dazu werden die Winkel und Abstände, die den Messpunkt am jeweiligen Gleis charakterisieren einmalig gemessen und in der Auswerte- und Steuereinheit (G) hinterlegt.

Der Neigungswinkel des Anhubsensors zur Gleisebene ist für die Messung nicht entscheidend. Die einzige Bedingung ist, dass die Ruhelage (1) und die Anhublage (2) im Sichtfeld des Anhubsensors liegen. Der Winkel ($\beta$) und der Abstand (s) bestimmen lediglich die Ruhelage (1) des Fahrdrahts und werden mit dem Neigungs- bzw. Abstandssensor gemessen.

Mit einer Auswerte- und Steuereinheit (G) können auch mehrere Anhubmessgeräte (H1, H2,...) synchron angesteuert werden. Bei drei Anhubmessgeräten kann der Anhub zum Beispiel an zwei aufeinanderfolgenden Stützpunkten und in Feldmitte gemessen werden.

Wird eine mechanische Neigungsverstelleinrichtung (E) verwendet, so sollte der Öffnungswinkel des Anhubsensors (A) so groß gewählt werden, dass die Messpunkte aller zu erfassenden Gleise (Li) abgebildet werden. Bei kleinerem Öffnungswinkel ist die Zeit zum Wechseln des beobachteten Gleises sonst wesentlich länger als mit ansteuerbarer Neigungsverstelleinrichtung.

Eine sehr hoch auflösende Neigungsverstelleinrichtung (E) bietet den Vorteil, dass der Fahrdraht in Ruhelage leichter und genauer angepeilt werden kann. Dies erleichtert das Messen vom Abstand (s) und vom Winkel ($\beta$).

Befinden sich grüne Pflanzen im Hintergrund, kann vorteilhaft ein im nahen Infrarot empfindlicher Anhubsensor und ein Infrarot durchlässiges Filter vor dem Sensor verwendet werden. In der Vegetationsperiode werden die grünen Pflanzenteile wegen der sehr hohen Reflektivität des Chlorophylls fast weiß abgebildet. Der Fahrdraht bleibt schwarz. Die Messung im nahen Infrarot ist wesentlich besser als im grünen Farbbereich geeignet.

Die Neigungsverstelleinrichtung (E) kann auch als drehbarer Spiegel oder drehbares Prisma vor dem Sensor realisiert werden.

Da das Anhubmessgerät mit einer Neigungsverstelleinrichtung (E) ausgerüstet ist, genügt es, zur Kalibrierung des Winkelsensors ein charakteristisches Merkmal (Ms) von einem beliebigen statischen Objekt (M) in beliebiger Entfernung zum Anhubmessgerät zu benutzen (siehe Figur 4).

Als Objekt (M) kann zum Beispiel ein Stück fest eingespannter Fahrdraht vor hellem Hintergrund verwendet werden.

Als charakteristisches Merkmal (Ms) kann jedes eindeutig vom Winkelsensor erfassbare Merkmal verwendet werden. Zum Beispiel kann eine Kante eines Fahrdrahtstücks oder der Mittelwert beider Kanten eines Fahrdrahtstücks verwendet werden.

Es ist zweckmäßig, den Drehpunkt der Winkelverstelleinrichtung in das Strahlenzentrum (3) des Winkelsensors zu legen. Auf diese Weise werden Kalibrierfehler vermieden. Bei Verwendung einer Kamera liegt das Strahlungszentrum ungefähr mit dem Abstand der Brennweite vor der Sensorebene.

Das Strahlungszentrum (3) ist der Punkt, an dem die Sichtstrahlen des Winkelsensors zusammenlaufen. Dieser Punkt kann auch hinter der Detektorfläche des Winkelsensors liegen. Dann ist dieser Punkt nur virtuell vorhanden.

Der Winkel ($\xi$) der Winkelverstelleinrichtung wird jetzt schrittweise so verändert, dass die Lage des Merkmals (4) den gesamten Öffnungswinkel des Anhubsensors (A) überstreicht. Dabei wird das Ausgangssignal (Q) des Winkelsensors gemeinsam mit dem Winkel ($\xi$) aufgezeichnet. Auf diese Weise erhält man die Punkte der Übertragungsfunktion (R) des Winkelsensors.

Vorteilhafterweise wird die Übertragungsfunktion (R) mit einer geeigneten Ausgleichsfunktion approximiert. Es kann zum Beispiel ein Polynom 2. Ordnung (= Parabel) verwendet werden. Während der Messung kann mit der Übertragungsfunktion (R) zu jedem beliebigen Ausgangssignal (Q) des Winkelsensors der Winkel ($\xi$) ermittelt werden.

Bei einer Kamera ist das Ausgangssignal die Pixelkoordinate der Kante, die als Referenzobjekt dient.

Gegenüber dem bekannten Stand der Technik hat dieses Verfahren folgende Vorteile:

- Es müssen keine Abmessungen des Referenzobjekts bekannt sein.
- Der Abstand zwischen Kamera und Referenzobjekt ist nicht erforderlich.
- Die Kalibrierung muss nur einmalig im Labor vorgenommen werden. Während der Messung ist keine Kalibrierung erforderlich. Dies verkürzt die Aufbauzeiten bei mobilen Anlagen.
- Nichtlinearitäten wie zum Beispiel Linsenverzerrungen zwischen dem Ausgangssignal des Winkelsensors und dem gemessenen Winkel beeinflussen das Messergebnis nicht.
- Solange der Fahrdraht im Sichtfeld des Winkelsensors bleibt, hat der Winkel ($\beta$), unter dem der Fahrdraht in Ruhelage im Winkelsensor erscheint keinen Einfluss auf den gemessenen Anhub. Bei bekannten Verfahren bleiben Nichtlinearitäten, die zum Bei spiel vom Objektiv der Kamera herrühren unberücksichtigt, weil nur ein linearer Faktor verwendet wird.

**Ausführungsbeispiel**

Die Erfindung soll nachfolgend anhand eines Ausführungsbeispiels näher erläutert werden.

Dabei zeigen:

- Figur 1 - Geometrie Anhubmessung im Querschnitt

- Figur 2 - Aufbau Anhubmessgerät

- Figur 3 - Topologie Messgerät

- Figur 4 - Anordnung zur Kalibrierung des Winkelsensors

- Figur 5 - Winkelbeziehung im Anhubsensor bei einer Kamera

- Figur 6 - Scheimpflugbedingung zur Abbildung des Anhubbereiches

- Figur 7 - dto., jedoch für zwei Gleise

- Figur 8 - Winkelbeziehung im Anhubsensor

- Figur 9 - Einrichten bei Verwendung einer Kamera

- Figur 10 - manuelle Bildauswertung mit Maßstab

- Figur 11 - Funktion der Kontrastanhebung

- Figur 12 - Bildauswertung bei Verwendung einer Kamera

- Figur 13 - Auswertung des Winkelverlaufs

- Figur 14 - Sichtverhältnisse beim Stromabnehmerdurchgang

- Figur 15 - Scheinwerferanordnung für zwei Gleise

- Figur 16 - Winkelbeziehung ohne Neigungsberücksichtigung

- Figur 17 - Beziehungen zur sensorneigungsunabhängigen Anhubmessung

- Figur 18 - Bestimmung der Bahnkurve mit Anhubstange

- Figur 19 - Korrektur für gemessenen Anhub (m)

- Figur 20 - Zusammenhang zwischen Anhub und Seitenversatz

- Figur 21 - Messen des korrekten Anhubs mit zwei Kameras

- Figur 22 - Bestimmung der Bahnkurve aus der Stützpunktgeometrie

- Figur 23 - geometrische Verhältnisse zur Bestimmung des AuflöSungsvermögens

Für alle Parameter, die das Übertragungsverhalten des Winkelsensors vom Eingangssignal (Strahlenwinkel $(\xi)$) zum Ausgangssignal (Q) beeinflussen, kann man mehrere Kalibrierfunktionen aufnehmen, bei denen die Einflussfaktoren variiert werden. Dann erhält man ein Kennlinienfeld, aus dem man am Messort je nach Aufstellungsparameter die gültige Übertragungsfunktion berechnen kann. Im einfachsten Fall wählt man die gemäß den Aufstellungsparametern nächstliegende Funktion aus.

Wenn der Winkelsensor ein Objektiv benötigt, kann zum Beispiel die Fokusierung die optischen Abbildungseigenschaften des Sensors beeinflussen. Dann kann es sinnvoll sein, mehrere Kalibrierfunktionen für unterschiedliche Fokuswerte aufzunehmen.

Wenn man eine Flächenkamera als Sensor einsetzt, kann man für mehrere Bildspalten eigene Übertragungsfunktionen aufnehmen. Dadurch kann man den Fehler, der insbesondere an den Bildecken größer ausfällt, als in der Bildmitte, kompensieren. Somit kann durch Wahl der geeigneten Spalte am Messort der Sichtwinkel zur Seite eingestellt werden.

Handelsübliche Neigungsköpfe für Überwachungskameras sind für dieses Kalibrierverfahren nicht geeignet, weil sie nicht die erforderliche Präzision aufweisen.

Der Vorteil liegt an der Präzision und dem Auflösungsvermögen der eingesetzten Drehachse. Sie hat folgende Daten: Rechnerische Auflösung $0,035 \times 10^{-3}$ °, kleinste Schrittweite $0,2 \times 10^{-3}$ °, unidirektionale Wiederholgenauigkeit $1,15 \times 10^{-3}$ °, Umkehrspiel $11,5 \times 10^{-3}$. Zum Vergleich: Der Öffnungswinkel der eingesetzten Kamera mit dem verwendeten 105mm Objektiv beträgt 2,6°. Die Auflösung der Kamera beträgt 1024 x 768 Bildpunkte. Somit entspricht 1 Bildpunkt ca. 13 Schritte der Drehachse.

Die Neigungsverstelleinrichtung (E) kann auch als drehbarer Spiegel oder drehbares Prisma vor dem Sensor realisiert werden.

Zur Messung des Sichtwinkels erfasst der Anhubsensor den Winkel unter dem der Fahrdraht von einem ortsfesten Punkt seitlich der Strecke aus gesehen wird. Zur Messung wird der Differenzwinkel zwischen Anhublage und Ruhelage $(\alpha)$ verwendet.

Der Sensor kann in unterschiedlichen Wellenlängen arbeiten. Es kann zum Beispiel Ultraschall, Radarstrahlung, Mikrowellen, langwelliges Infrarot (Temperaturstrahlung), kurzwelliges Infrarot, sichtbares Licht, UV-Strahlung oder Röntgenstrahlung verwendet werden.

Zur Messung des Winkels können unterschiedliche Sensoren eingesetzt werden. Eine Möglichkeit ist die Verwendung einer Kamera. Das Prinzip ist in Figur 5 gezeigt. Alle Strahlen gehen vom Objekt aus durch das Strahlungszentrum (3) und treffen auf den Sensor (SE) auf. Der senkrechte Abstand zwischen dem Strahlungszentrum und dem Sensor beträgt (b). Diese Entfernung entspricht ungefähr der Brennweite des eingesetzten Objektivs.

Es gilt:

$$\tan(\omega_i) = \frac{sx\,(u_i - u_0)}{b} \qquad\qquad (G\ 1)$$

(sx) ist der Skalierungsfaktor zur Umrechnung der Pixelkoordinaten (u) in mm. Dabei handelt es sich um die Breite eines Bildpunkts (=Pixels) in mm.

Der Winkel (α) berechnet sich aus der Winkeldifferenz der zwei Winkel (ω) unter denen der Fahrdraht in Ruhelage (1) und Anhublage (2) gesehen wird.

$$\alpha = \omega_2 - \omega_1 = \text{atan}\left(\frac{sx\,(u_2 - u_0)}{b}\right) - \text{atan}\left(\frac{sx\,(u_1 - u_0)}{b}\right) \qquad \text{(G 2)}$$

Optional kann die Kameraverzerrung durch ein geeignetes Kalibrierverfahren minimiert werden. Dadurch wird eine bessere Linearität zwischen Kamerasignal und Winkel erreicht. Die Kameraverzerrung kann zum Beispiel durch ein Polynommodell oder durch ein Divisionsmodell modelliert werden. Ein Verfahren zur Modellierung der Verzerrung wurde von Tsai beschrieben (TSA86). Dabei wird die Verzerrung des Objektivs durch einen quadratischen Faktor in der Übertragungsfunktion angenähert.

Eine andere Möglichkeit besteht darin, das beschriebene Verfahren zur Kalibrierung des Winkelsensors anzuwenden.

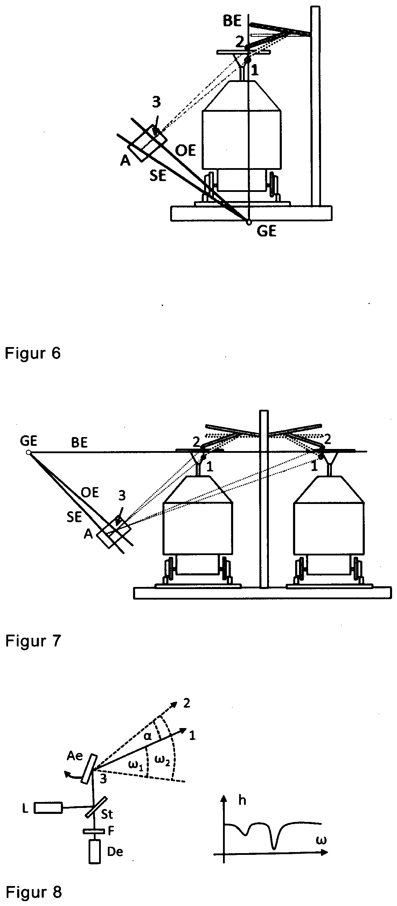

Um die Schärfenebene frei wählen zu können, kann eine Schärfendehnung nach Scheimpflug durchgeführt werden (siehe Figur 6 und Figur 7). Die Scheimpflugbedingung besagt, dass die Bildebene (BE) dann scharf abgebildet wird, wenn die Sensorebene (SE) und die Obejktivebene (OE) so angeordnet sind, dass diese drei Ebenen sich in einer Geraden (GE) schneiden. Auf diese Weise ist es zum Beispiel möglich, ein scharfes Bild für den gesamten Anhubbereich zu erreichen. Die nötige Anordnung ist in Figur 6 gezeigt. Dies ist besonders bei steilen Winkeln (β) sinnvoll.

Eine andere Möglichkeit besteht darin, die Schärfenebene so zu wählen, dass der Anhub in beiden benachbarten Gleisen scharf abgebildet wird (siehe Figur 7). Dies kann sinnvoll sein, wenn die Kamera einen so großen Öffnungswinkel hat, dass ein Schwenken der Kamera nicht erforderlich ist.

Der Kippwinkel des Sensors muss bei Anwendung der Scheimpflugbedingung bei der Berechnung des Anhubs berücksichtigt werden.

Die Schärfe erstreckt sich dabei immer auf einen etwas größeren Bereich vor und hinter der scharfgestellten Bildebene (BE), weil wegen der begrenzten Sensorauflösung auch ein kleiner Streukreis noch hinreichend scharf abgebildet wird.

Wird als Anhubsensor ein Laserscanner verwendet, so bietet es sich an, eine Anordnung nach Figur 8 zu verwenden. Ein Quelle (L) sendet Strahlung über einen Strahlenteiler (St) und eine Ablenkeinheit (Ae) aus. Das reflektierte Licht wird über einen optionalen otischen Filter (F), der auf die Quelle abgestimmt ist mit einem Detektor (De) empfangen. Als Strahlteiler kann bei sichtbarem Licht ein teildurchlässiger Spiegel verwendet werden. Als Lichtquelle ein Laser und als Ablenkeinheit ein Drehspiegel. Ausgewertet wird die Helligkeit des im Detektor empfangenen Signals in Abhängigkeit des Winkels (ω). Die Signalauswertung des Helligkeitssignals ist gleich, wie bei einer Zeilenkamera. Eine ähnliche Messanordnung wird von Japan Rail zur Fahrdrahtdickenmessung benutzt (SHI97). Durch entsprechende Auslegung ist das Verfahren auch zur Anhubmessung einsetzbar.

Der Anhubwinkel (α) ist der Differenzwinkel der beiden Strahlenwinkel ($\omega_1$) und ($\omega_2$).

Das Signal der Lichtquelle könnte im Detektor auch bezüglich der Laufzeit des Lichts vom Sender über den Fahrdraht bis zum Detektor ausgewertet werden. Dann bekommt man zu jedem Winkel (ω) direkt den Abstand zum Fahrdraht. Aus Winkel und Abstand erhält man direkt die Bahnkurve des Fahrdrahts und kann den korrekten Anhub berechnen. Nach heutigem Stand der Technik hat diese Art von Sensor nicht die nötige Genauigkeit und Auflösung.

Statt Licht kommen auch Radarstrahlung, Mikrowellen oder Schall in Frage. Diese Strahlung hätte den Nachteil eines geringeren Auflösungsvermögens.

Zur Messung des korrekten Anhubs kann auch das Lichtschnittverfahren verwendet werden. Dazu wird eine vertikale Laserlinie auf den Fahrdraht projiziert. Die Linie wird mit einer Flächenkamera ausgewertet. Der Punkt an dem sich die Linie mit dem Objekt schneidet kann im Bild bezüglich seiner 3D Koordinaten ausgewertet werden.

Um die Messrate zu steigern ist es sinnvoll, das Kamerabild auf einen möglichst kleinen Bildausschnitt zu begrenzen.

Um die Augensicherheit des Lasers zu erhöhen kann dieser gepulst betrieben werden. Dann leuchtet er nur, wenn der Verschluss der Kamera geöffnet ist.

Der Einfluss des Sonnenlichts kann reduziert werden indem an der Kamera eine möglichst kurze Belichtungszeit gewählt wird und die Pulsleistung des Lasers entsprechend erhöht wird.

Zusätzlich ist es sinnvoll einen schmalbandigen optischen Filter vor der Kamera einzusetzen, der nur im Frequenzbereich des Lasers durchlässig ist. Eine typische Bandbreite ist 15 nm. Eine typische Wellenlänge des Lasers ist 808 nm. Durch den Filter kann der Einfluss des Sonnenlichts weiter reduziert werden.

Wenn eine Flächenkamera als Anhubsensor verwendet wird, kann der Messbereich durch Auswahl des Bildausschnitts sehr genau eingestellt werden. Dies erleichtert das Einjustieren weil die mechanische Justierung nicht so genau erfolgen muss. Die genaue Einstellung erfolgt elektronisch im Bild.

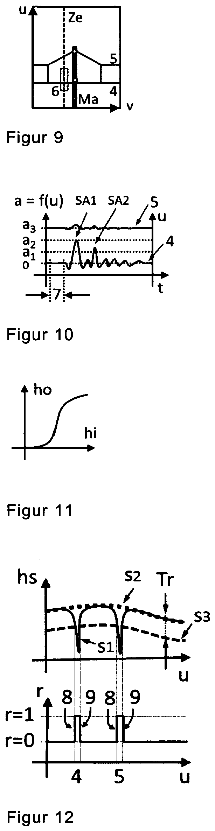

Die Flächenkamera wird bevorzugt um 90° gedreht installiert (siehe Figur 9). Die Zeilen (u) stehen dann senkrecht zur Gleisebene. Die Spalten (v) verlaufen waagerecht. Der Fahrdraht ist in der Figur mit (4) bezeichnet. Das Tragseil (5) ist ein beispielhaft gezeigtes Fremdobjekt, das nicht vermessen werden soll.

Zur eigentlichen Messung wird vorzugsweise nur eine Zeile (Ze) des Bildes verwendet. Diese Zeile kann, wenn die Messung an einem Mast (Ma) durchgeführt werden soll sehr nah an diesem gewählt werden. Die Auswahl der Zeile (Ze) entspricht dabei einem Schwenken der Kamera.

Im zu erwartenden Anhubbereich (6) befinden sich idealerweise keine Fremdobjekte. Das erleichtert die Auswertung des Anhubverlaufs. Die Auswahl des Ausschnitts der Zeile entspricht dabei einer Neigung der Kamera.

Die Beschränkung auf eine Zeile hat den Vorteil, dass die Datenmenge, die zur Auswerteeinheit übertragen und von dieser ausgewertet werden muss gegenüber dem Vollbild erheblich reduziert ist. Zudem nimmt die mögliche Bildrate zu.

Bei der erfindungsgemäßen Lösung steigt die Bildrate um mehr als den Faktor 5. Bei einer CCD Kamera ist es wichtig, dass der Ausschnitt in Zeilenrichtung gewählt wird. Nur so kann die Bildrate gesteigert werden. Bei einer Reduktion der Spaltenzahl nimmt die Bildrate nicht zu. Bei CMOS-Sensoren wird die Bildrate üblicherweise sowohl bei Reduktion der Zeilenzahl, als auch bei Reduktion der Spaltenzahl größer.

Die 90° Drehung hat auch den Vorteil, dass in Messrichtung mehr Bildpunkte zur Verfügung stehen als ohne die Drehung. Bei der erfindungsgemäßen Lösung beträgt die Auflösung der Kamera 1024 x 768 Bildpunkte.

Es kann auch mehr als eine Zeile verwendet werden. Die Signale dieser Zeilen werden dann aufsummiert. Dies reduziert das Bildrauschen und steigert die Empfindlichkeit des Sensors. Dann kann für den Nachtbetrieb eine Beleuchtung mit geringerer Leistung verwendet werden.

Gegenüber der Verwendung einer reinen Zeilenkamera hat die Verwendung einer Flächenkamera folgende Vorteile:

- Die Bildpunkte sind bei der Flächenkamera üblicherweise kleiner als bei der Zeilenkamera. Dies hat den Vorteil, dass Objektive mit kleinerem Bildkreis und kleinerer Brennweite verwendet werden können. Diese Objektive sind dann billiger und leichter. (Wir verwenden eine Brennweite von 105 mm. Bei einer vergleichbaren Zeilenkamera hätte ein 300 mm Objektiv verwendet werden müssen).

- Zum Einrichten des Messpunkts hat man ein normales Bild zur Verfügung. Dadurch kann man sich im Bild sehr leicht orientieren. Bei einer Zeilenkamera wäre das erheblich schwieriger.

Während der Messung werden die Zeilen zunächst in einem Ringpuffer gespeichert. Der Puffer ist so bemessen, dass nach einer Zugfahrt genügend Zeit zum Start der Auswertung besteht. Der Start wird manuell durch den Bediener der Anlage ausgelöst. Die Verwendung des Puffers bietet auch den Vorteil, dass die Bildauswertung nicht echtzeitfähig sein muss.

Zeigt man das Bild aus dem Puffer nach der Messung an, so erhält man eine Darstellung, die zu Figur 10 ähnlich ist. Weil die Zeilen zeitlich aneinander gefügt sind, ist die zeitliche Änderung der ausgewählten Bildzeile (Ze) auf der Achse (t) zu sehen. Der rechte Maßstab ist die Bildspalte (u). Zur Auswertung kann man aus der Geometrie der Anordnung und der Bildspalte (u) einen Maßstab berechnen (a = f(u)). Wird der Nullpunkt des Maßstabs so gelegt, dass er mit dem Fahrdraht (4) in Ruhelage (7) übereinstimmt, kann der Anhub (a) direkt abgelesen werden. In der Figur ist der Anhub des 1.Stromabnehmers (SA1) und des 2. Stromabnehmers (SA2) exemplarisch gezeigt.

Das direkte Ablesen hat den Vorteil, dass auch dann gemessen werden kann, wenn eine automatische Auswertung der Daten nicht möglich ist. Dies kann der Fall sein, wenn sich Wolken oder Bäume im Messbereich (Figur 9(6)) befinden oder wenn der Bildkontrast sehr gering ist.

Zur manuellen Auswertung kann es sinnvoll sein, eine Kontrastanhebung durchzuführen. Dies kann zum Beispiel mit einer Tabelle realisiert werden. Eingangswert ist die Originalhelligkeit (hi), Ausgangswert ist die neue Helligkeit mit verstärktem Kontrast (ho). Man kann auch eine Falschfarbendarstellung wählen. Dann wird der Kontrast noch stärker betont. Ein Beispiel einer Funktion ist in Figur 11 gezeigt. Der Funktionsverlauf kann zum Beispiel durch Eingabe des Benutzers festgelegt werden. Eine andere Möglichkeit sind statistische Verfahren, zum Beispiel, dass nach der Kontraststeigerung gleich viele Bildpunkte mit jeder Helligkeit vorhanden sind (Halcon Funktion equ_histo[1]) oder, dass der gesamte Helligkeitsbereich des Bildes ausgenutzt wird (Halcon Funktion scale_image_max).

Die Auswertung des aufgezeichneten Bildes kann zeilenweise erfolgen. Dadurch hat man den Vorteil, dass das Verfahren auch schritthaltend bereits während der Aufzeichnung erfolgen kann. Dann muss die Implementation aber so ausgelegt sein, dass sie genauso schnell, wie die Aufnahme der Daten erfolgt.

In Figur 12 sind die ersten Auswertungsschritte gezeigt. Zuerst wird das Zeilensignals (S1) tiefpassgefiltert das Ergebnis ist das Signal (S2).

Als Tiefpass kommen verschiedene Filter in Frage. Eine einfache Möglichkeit ist ein Mittelwertfilter. Im Beispiel ist ein Rankfilter gezeigt. Dabei werden die Helligkeitswerte, die auf der Filtermatrix liegen zuerst aufsteigend sortiert. Danach wählt man den n hellsten Punkt aus (n ist eine natürliche Zahl). Wird der Filterparameter n nicht an den Extremwerten gewählt, besteht der Vorteil, dass einzelne schwarze oder weiße Bildpunkte das Filterergebnis nicht negativ beeinflussen. Im Beispiel ist der Filter so parametriert, dass fast der hellste Punkt verwendet wird. Die Filtergröße wird mindestens so groß, wie der halbe Fahrdrahtdurchmesser gewählt. Dadurch erhält man ein Bild, das die Helligkeit des Hintergrunds wiedergibt.

Zur Schwellwertbildung wird die Hintergrundhelligkeit (S2) um den Schwellwert (Tr) reduziert. Dann erhält man den Helligkeitsverlauf (S3). Werden alle Bildpunkte, die dunkler als die Schwelle (S3) sind in (S1) ausgewählt, so erhält man den in Figur 12 unten dargestellten Bereich.

Die hier dargestellte dynamische Schwellwertbildung hat gegenüber einem statischen Schwellwert den Vorteil, dass niederfrequente Helligkeitsunterschiede im Hintergrundbereich ausgeglichen werden. Diese Helligkeitsunterschiede sind im Bereich des Himmels häufig anzutreffen. Der Himmel stellt im Messbereich den üblichen Hintergrund für den Fahrdraht dar.

Der skizzierte Algorithmus ist auch mit Flächenfiltern auf das gesamte Bild anwendbar.

Nachts wird der Fahrdraht bei Beleuchtung hell vor dem dunklen Himmel abgebildet. Der Algorithmus ist dann durch invertieren der Bildhelligkeit ohne Änderungen anwendbar.

Nach der Schwellwertbildung wählt man die Bereiche aus, die die erwartete Breite des Fahrdrahts haben.

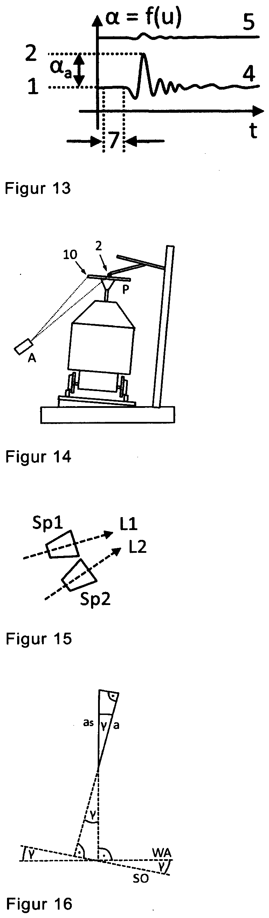

Nun wird von jedem Bereich die linke Kante (8), die rechte Kante (9) oder der Mittelwert beider Kanten gewählt. Der Mittelwert ist die bevorzugte Variante bei einem Einzelfahrdraht, weil so die möglichen Fehler bei der Kantenbestimmung minimiert werden. Auf diese Weise kommt man zum Signalverlauf in (Figur 13).

Bei einem Doppelfahrdraht füllt man den Zwischenraum zwischen beiden Bereichen. Das Kriterium zum Füllen ist die maximal erwartete Breite des Zwischenraums. Die linke Kante (8) charakterisiert jetzt den einen Fahrdraht und die rechte Kante (9) den anderen Fahrdraht. Durch getrennte Auswertung beider Kanten kann der Anhubverlauf beider Fahrdrähte bestimmt werden.

Wenn man einen nicht bildgebenden Anhubsensor verwendet, erhält man sofort den Signalverlauf aus.

Danach verfolgt man von der Ruhelage (7) ausgehend spaltenweise die jeweils nächste Region des Fahrdrahts (Figur 13 zeigt den Signalverlauf von Fahrdraht und Tragseil.

Am Beginn der Auswertung wird der Nullpunkt des Fahrdrahts bestimmt. Das ist notwendig, weil sich der Nullpunkt zum Beispiel wegen der Reibung in den Radspannern nach jeder Zufahrt geringfügig ändert. Ein anderer Grund für die Nullpunktverschiebung sind Temperaturänderungen des Fahrdrahts. Diese können zum Beispiel durch tageszeitliche Temperaturschwankungen oder durch die Eigenerwärmung des Fahrdrahts bei Stromfluss verursacht werden. Zur Nullpunktbestimmung wird das dem erwarteten Nullpunkt nächste Signal solange verfolgt, bis eine vorgegebene Schwelle zwischen Minimum und Maximum überschritten ist. Als Nullpunkt wird der Mittelwert dieses Signalabschnitts verwendet (7).

Danach wird dieses Signal weiter verfolgt, bis der maximale Anhub ($\alpha_a$) erreicht ist. Die Messpunkte für die einzelnen Stromabnehmer können ebenfalls durch Bildverarbeitung gefunden werden.

Optional wäre es auch möglich die Auswertung schritthaltend durchzuführen. Dann kann die Messung automatisch gestartet werden, sobald ein Schwellwert des Anhubwerts überschritten wird.

Werden mehrere Anhubsensoren an einem Gleis verwendet, so kann aus dem Abstand der Messpunkte am Fahrdraht und charakteristischen Punkten im Signalverlauf des Anhubs der verschiedenen Sensoren die Geschwindigkeit des Zugs bestimmt werden. Charakteristische Punkte können zum Beispiel die Maximumsdurchgänge sein.

Systembedingt kann ein bildgebender Anhubsensor, wenn er von unten her auf den Fahrdraht gerichtet wird, zum Zeitpunkt des Stromabnehmerdurchgangs keine Messdaten liefern.

Figur 14 zeigt die Sichtverhältnisse beim Stromabnehmerdurchgang.

Eine Lösung des Problems stellt eine möglichst hohe Abtastrate dar. Dann kann der Anhub zum Zeitpunkt des Stromabnehmerdurchgangs durch eine geeignete Ausgleichsfunktion aus den Messwerten kurz vor und nach dem Durchgang extrapoliert werden. Eine Möglichkeit stellt die Verwendung von Akima Splines dar. Diese Art von Splines neigt weniger zum Überschwingen als zum Beispiel kubische Splines. Eine andere Möglichkeit ist eine Funktion 2. Ordnung (=Parabel).

Die Eigenfrequenz der Fahrleitung beträgt ungefähr 1 Hz. Diese Frequenz hat den größten Anteil am zeitlichen Anhubverlauf. Deshalb wird der Schwingungsverlauf mit der bei der Messanlage der erfindungsgemäßen Lösung verwendeten Kamera mit 100 Hz Abtastrate gut wiedergegeben.

Eine Abschätzung für den Fehler, der durch die fehlenden Messdaten beim Stromabnehmerdurchgang verursacht wird, erhält man aus dem Unterschied des Anhubs von den letzten Messpunkten vor nach den fehlenden Daten. Der Unterschied des Anhubs zwischen zwei aufeinanderfolgenden Messpunkten nimmt zum Stromabnehmerdurchgang hin immer weiter ab. Üblicher Weise ist diese Differenz kleiner als 1mm. Dieser Unterschied stellt auch eine Abschätzung für den maximal durch die fehlenden Daten verursachten Fehler dar.

Wenn eine Beleuchtung des Fahrdrahts an den Messpunkten vorgesehen wird kann die Anlage auch nachts betrieben werden.

Wenn man einen stark gebündelten Scheinwerfer auswählt, hat das den Vorteil, dass die Anschlussleistung kleiner gewählt werden kann. Dann verwendet man für mehrere Fahrtrichtungen vorteilhaft entweder einen motorisch schwenkbaren Scheinwerfer oder jeweils einen Scheinwerfer pro Fahrtrichtung. Eine eigene Schwenkeinrichtung für den Scheinwerfer kann eingespart werden, wenn der Scheinwerfer direkt an der Drehbaren Kamera angebracht wird. Eine andere Lösungsmöglichkeit für das Schwenken der Scheinwerfer zeigt die Scheinwerferanordnung in Figur 15 für zwei Gleise. Je nach gewähltem Gleis wird dann der entsprechende Scheinwerfer verwendet.

Um weniger Lichtleistung zu benötigen, kann der Fahrdraht im Bereich des jeweiligen Messpunkts weiß angestrichen werden. Dazu ist eine Gleissperrung erforderlich. Wenn man den Pinsel an einer zugelassenen Isolierstange montiert, kann auf eine Abschaltung der Fahrleitung verzichtet werden.

Die Beleuchtung kann auch näher am Gleis aufgestellt, als die Kamera. Dann wird weniger Lichtleistung benötigt. Dies liegt an der quadratischen Abnahme der Beleuchtungsstärke mit der Entfernung.

Vorteilhafter Weise wird zur Beleuchtung eine monochromatische Lichtquelle, wie zum Beispiel ein Laser oder eine LED Beleuchtung verwendet. Bei Verwendung einer solchen Lichtquelle bietet es sich an, einen entsprechenden Filter vor der Kamera anzubringen. Dadurch wir der Einfluss des Sonnenlichts ausgeschlossen oder zumindest reduziert. Eine weitere Reduktion des Sonnenlichteinflusses wird erzielt, wenn die Lichtquelle gepulst betrieben wird und nur so lange eingeschaltet ist, wir die Kamera belichtet. Dadurch werden die Leistungsaufnahme und die Erwärmung der Lichtquelle reduziert. Die Augensicherheit kann so trotz hoher Pulsleistung sichergestellt werden. Wenn man Tags über eine entsprechend beschaffene Beleuchtung einsetzt, können Objekte im Hintergrund des Kamerabildes ausgeblendet werden, weil die Lichtleistung wegen der Aufweitung des Strahls quadratisch mit der Entfernung abnimmt. Die Hintergrundobjekte bleiben dann dunkel gegenüber dem hellen Fahrdraht.

Wird das Helligkeitssignal des Anhubsensors nachts invertiert, können am Tag und in der Nacht die gleichen Auswertealgorithmen verwendet werden.

Die manuelle Auswertung funktioniert wenn eine Beleuchtung vorhanden ist tags und nachts in gleicher Weise.

Wurde die statische Anpresskraft des Stromabnehmers gemessen, so kann die Steifigkeit des Fahrdrahts an der Stelle der Anhubmessung bestimmt werden, wenn der Zug mit niedriger Geschwindigkeit an der Messstelle vorbei fährt. Es gilt: Steifigkeit = Anhub/Kontaktkraft. Die Steifigkeit ist nötig, um zu verifizieren, dass ein charakteristischer Stützpunkt verwendet wurde. Der maximale Anhub ist ohne Kenntnis der Steifigkeit nicht aussagekräftig.

Die Kontaktkraft des Stromabnehmers kann zum Beispiel statisch, vor der Zugfahrt mit einer Federwaage auf dem Dach des Zugs gemessen werden. Eine andere Möglichkeit ist die Messung der Kraft mit einem Kontaktkraftmesssystem. Dies bietet sich an, wenn der Stromabnehmer für die Messkampagne ohnehin mit Kraftsensoren instrumentiert ist.

Dieses Messverfahren hat gegenüber den alternativen Verfahren den Vorteil, dass kein Turmtriebwagen und keine Leiter benötigt werden. Das Abschalten der Fahrleitung an der Messstelle entfällt. Auch eine Gleissperrung für Arbeiten im Gleisbereich ist nicht erforderlich.

Um die Zentrifugalkraft in Kurven auszugleichen ist das Gleis dort mit einem Neigungswinkel ($\gamma$) gegenüber der Waagerechten (WA) verlegt. Die Höhe der bogenäußeren Schiene gegenüber der Waagerechten wird als Überhöhung bezeichnet.

Der Aufbau des Anhubmessgeräts ist in Figur 1 schematisch gezeigt. Die geometrischen Beziehungen bei einer Anhubmessung ohne Berücksichtigung der Überhöhung, zur Waagerechten (WA) und der korrekten Messung zur Schienenoberkante (SO) sind in Figur 16 dargestellt.

Es gilt die trigonometrische Beziehjung:

$$as = a / \cos(\gamma) \qquad\qquad (G\ 3)$$

Bei einer Überhöhung von 150mm und einem Gleisabstand von 1435 mm beträgt der Neigungswinkel ($\gamma$) 6°. Bei einem Anhub (a) von 150 mm würde man ohne Berücksichtigung der Überhöhung einen Anhub (as) von 151 mm messen. Dieser Fehler beträgt ca. 20% der Messtoleranz gemäß EN 50317 von 5 mm.

Das im Folgenden vorgestellte Verfahren umgeht diesen Fehler, indem die Neigung des Gleises zuerst gemessen wird und dann in die geometrischen Überlegungen einbezogen wird.

Nach dem Aufstellen des Messgeräts wird mit einem berührungslosen Entfernungsmesser (z.B. ein Laserabstandssensor) der Abstand zwischen dem optischen Zentrum (3) des Winkelsensors (A) (z.B. einer Kamera) und dem Fahrdraht in Ruhelage (1) gemessen.

Zusätzlich misst man mit einem Winkelmesser (C) die Neigung des Entfernungsmessers ($\delta$) zur Horizontalen.

Zusätzlich wird der Neigungswinkel des Gleises ($\gamma$) gemessen.

Es gilt:

$$\beta \; = \; \gamma \; + \; \delta \qquad\qquad\qquad (G\,4)$$

Der Neigungswinkel des Gleises kann zum Beispiel, mit Streckensperrung, im Gleis mit einer Winkelwasserwaage gemessen werden. Eine andere Möglichkeit ist das Einmessen der zwei Schienenköpfe mit einem Tachymeter in 3D Koordinaten. Aus den Koordinaten kann die Neigung berechnet werden. Eine dritte Möglichkeit besteht darin, zwei gegenüberliegende Punkte auf den zwei Schienenköpfen mit einem Entfernungsmesser einzumessen und anschließend die Neigung des Entfernungsmessers mit einer Winkelwasserwaage zu messen. Aus den geometrischen Beziehungen kann die Neigung berechnet werden.

Im üblichen Einsatzbereich, auf geraden, oder fast geraden Gleisen kann die Gleisüberhöhung auch vernachlässigt werden. Dann gilt: $\beta = \delta$.

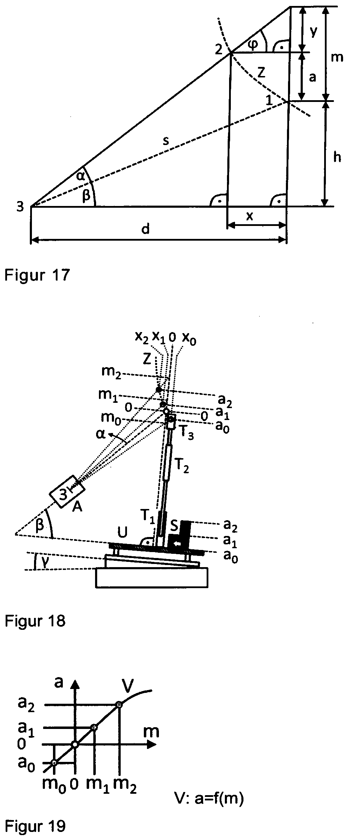

Nach Figur 17 gilt für den Messfehler (y) bei gegebenem Seitenversatz (x):

$$\tan(\varphi) = \frac{y}{x} \qquad\qquad\qquad (G\,5)$$

Auflösen nach (y) liefert:

$$y = x\,\tan(\varphi) \;\; \text{mit}\; \varphi = \; \alpha + \beta = \; \alpha + \gamma + \; \delta \qquad\qquad (G\,6)$$

Üblicher Weise sind die Winkel $\alpha$ und $\gamma$ klein gegenüber $\delta$. Um die Größe des Fehlers abzuschätzen genügt es deshalb, den Winkel $\varphi \approx \delta$ zu benutzen.

Messungen an realen Stützpunkten haben gezeigt, dass der auftretende Seitenversatz (x) im notwendigen Messbereich an typischen Stützpunkten 10 mm bis 30 mm beträgt. Setzt man 20 mm als Seitenversatz und als zulässigen Fehler den laut EN 50317 vorgegebenen Wert von +/-5 mm ein, so beträgt der Winkelbereich in dem die Kamera aufgestellt werden kann:

$$\delta = \text{atan}\left(\frac{y}{x}\right) = \text{atan}\left(\frac{5}{20}\right) = 14° \qquad\qquad (G\,7)$$

Je nach Messstelle kann der Anhubsenor nur in einem Abstand (d) von 10 m zum Gleis aufgestellt werden. Dort darf der Sensor höchstens folgende Höhe unterhalb des Fahrdrahts haben.

$$\tan(\delta) \sim \tan(\beta) = \frac{h}{d} => h = d\,\tan(\beta) = 10\text{m}\,\tan(14°) = 2{,}5 m \qquad (G\,8)$$

Oft ist das Erdniveau 1 m unterhalb der Gleisebene. Bei der auf Hochgeschwindigkeitsstrecken üblichen Fahrdrahthöhe von 5,3 m heißt das, dass der Anhubsensor 2,8 m über Erdniveau aufgestellt werden muss, um den Messfehler kleiner als 5 mm zu halten. Dies gilt unter der (unrealistischen) Annahme, dass keine weiteren Messfehler auftreten.

Das würde bedeuten, dass entweder ein schweres Stativ oder ein Gerüst verwendet werden muss. Dies führt zu einer erheblichen Erschwernis bei der Messung.

Die hier dargestellte Abschätzung geht von Annahmen für übliche Stützpunkte und Messstellen aus. Eine Betrachtung des größtmöglichen Fehlers würde noch deutlich größere Einschränkungen bedeuten.

Um diese Einschränkungen umgehen zu können, muss das im Folgenden beschriebene Verfahren zur Berücksichtigung des Seitenversatzes bei der Anhubmessung benutzt werden.

Im Folgenden wird zuerst eine Methode vorgestellt, wie aus einem bekannten Seitenversatz (x), den Winkeln ($\beta$), ($\alpha$) und dem Abstand (s) der korrekte Anhub (a) gemessen werden kann (Skizze siehe Figur 7).

Es gilt:

$$h = s\,\sin(\beta)\,; \;\; d = s\,cos(\beta) \qquad\qquad\qquad (G\,9)$$

Während der Messung wird der Winkelunterschied zur Ruhelage ($\alpha$) vom Anhubsensor erfasst.

In der Auswerteeinheit kann daraus der momentane Anhub ohne Berücksichtigung des Seitenversatzes berechnet werden:

$$\tan(\alpha + \beta) = \frac{h + m}{d} \qquad (G\ 10)$$

Auflösen nach dem Anhub (m) ohne Berücksichtigung vom Seitenversatz liefert:

$$m = d \tan(\alpha + \beta) - h = s\ (\cos(\beta) \tan(\alpha + \beta) - \sin(\beta)) \qquad (G\ 11)$$

Um aus dem gemessenen, unkorrigierten Anhub (m) den korrekten Anhub (a) zu bestimmen, kann die folgende Gleichung aufgrund der zwei ähnlichen Dreiecke angesetzt werden:

$$\frac{h + m}{d} = \frac{h + a}{d - x} \qquad (G\ 12)$$

Auflösen nach dem korrekten Anhub (a) liefert:

$$a = (h + m)\left(1 - \frac{x}{d}\right) - h \qquad (G\ 13)$$

Der Seitenversatz kann bei einer Gleissperrung durch Anheben mit einer Stange mit bekanntem Anhub und Messen des unkorrigierten Anhubs (m) (siehe Figur 18) bestimmt werden.

Dazu wird die Stange (T) mit mindestens einer Stufe um die bekannte Stufenhöhe (a1) angehoben.

Um die Stange an die unterschiedlichen Fahrdrahthöhen in der Ruhelage anzupassen muss ein stufenlos verstellbarer Teleskopteil ($T_1$) an der Stange vorhanden sein. Damit die Stange während der Messung sicher mit dem Fahrdraht verbunden bleibt, ist oben an der Stange eine Befestigungsvorrichtung ($T_3$) vorhanden. Die Befestigungseinrichtung kann zum Beispiel die Fahrdrahterdungsklemme einer Erdungsgarnitur sein. Eine andere Möglichkeit wäre eine Gabel in der der Fahrdraht liegt. Soll die Fahrleitung während der Messung nicht abgeschaltet und geerdet werden, so muss in der Stange (T) ein Isolator ($T_2$), der mindestens für die Nennspannung der Fahrleitung ausgelegt ist, vorhanden sein.

Da der Fahrdraht durch das Eigengewicht der Anhubstange nach unten gezogen wird, muss die Ruhelage (Werte bei 0) vor dem Einhängen der Stange mit dem Anhubsensor (A) erfasst werden. Bei der Auswertung der Messdaten kann diese dann berücksichtigt werden, um den Nullpunkt der Anhubkurve zu bestimmen. Nach dem Einhängen der Stange befindet sich der Fahrdraht bei der Position ($a_0$, $m_0$, $x_0$). Zu den auf $a_0$ bezogenen, bekannten Stufenhöhen ($a_{1,2...}$) wird der Anhub (a) an der Stelle (m) ohne Stange abgezogen.

Eine zweite Möglichkeit ist, die Fahrdrahtlage vor dem Einhängen der Stange zu beobachten und das Teleskop ($T_3$) nach dem Einhängen so zu verstellen, dass die gleiche Lage wie vor dem Einhängen wieder erreicht wird.

Eine dritte Möglichkeit besteht darin, in die Stange einen Kraftsensor einzubauen. Dann kann die Auswertung am Punkt mit der Kraft in Ruhelage erfolgen. Welche Kraft das ist hängt vom Einbauort des Kraftsensors ab. Wird der Sensor zum Beispiel unmittelbar unterhalb der Klemmvorrichtung (T3) eingebaut, so ist dies der Punkt mit annähernd 0 N. Baut man den Sensor am unteren Ende der Stange ein, so ist es der Punkt, der der Masse der Stange entspricht.

Eine vierte Möglichkeit besteht darin, ein beliebiges Messverfahren mit hinreichend kleinem Messfehler zur Höhenmessung zu verwenden und aus den Höhendifferenzen den korrekten Anhub (a) für die Stufenhöhen ausmessen. Ein Verfahren ist zum Beispiel die Höhenmessung mit einem Tachymeter.

Bei geringer Masse der Stange kann die Berücksichtigung der Änderung der Ruhelage durch das Eigengewicht der Stange entfallen.

Nach dem Einhängen der Stange wird der Ausgangspunkt für die Messung ($m_0$, $x_0$, $a_0$) bestimmt. Jetzt wird die Stange angehoben und die Treppe (S) unter die Stange geschoben, so dass diese auf der ersten Treppenstufe zu liegen kommt. Danach werden die Messdaten für die erste Stufenhöhe erfasst. ($m_1$, $x_1$, $a_1$). Um zusätzliche Messpunkte aufzunehmen, können an der Treppe weitere Stufen vorhanden sein. Statt der Treppe kann auch eine zusätzliche stufenweise Höhenverstelleinrichtung an der Stange, zum Beispiel durch Raststufen, vorgesehen sein.

Es ist möglich, durch Anbringung einer Skala am Teleskop, die tatsächlich vorhandene Fahrdrahthöhe zu messen.

Optional ist es möglich, den gemessenen, unkorrigierten Anhub (m) gemeinsam mit dem korrekten Anhub (a) zu erfassen und die Daten paarweise auszuwerten. Dazu kommt auch eine Kreuzkorrelation der Daten in Frage, wenn kein zeitlicher Synchronisationsmechanismus mit Zeitstempeln oder einem Takt vorhanden ist. Der korrekte Anhub (a) wird mit einem beliebigen Messverfahren bestimmt, dass den Höhenmessfehler nicht aufweist. Zum Beispiel kann ein Laserentfernungsmesser, der zusätzlich auf der Auflage (U) senkrecht zur Gleisebene nach oben gerichtet wird oder ein Tachymeter verwendet werden. Wenn man dieses Vorgehen wählt kann die Treppe (S) entfallen. Das Teleskop (T) kann für die stufenweise Verstellung jeweils beliebig eingestellt werden. Der korrekte Anhub (a) und der gemessene Anhub (m) werden dann gemeinsam nach verstellen des Teleskopauszugs erfasst. Die stufenweise Höhenverstellung ist erforderlich, wenn das Referenzmesssystem nicht echtzeitfähig ist. Wenn das Referenzmesssystem echtzeitfähig ist, genügt es den Fahrdraht einmalig über den notwendigen Messbereich anzuheben. Dazu kann auch eine reguläre Zugfahrt verwendet werden.

Eine Einschränkung der Messung mit der Anhubstange ist, dass dieses Verfahren nur für zeitinvariante Bahnverläufe angewendet werden kann. Der Fahrdraht muss sich bei unterschiedlichen Messungen also immer auf der gleichen Bahn bewegen.

Bei Verwendung einer Stange mit Kraftsensor kann vorteilhaft auch die Steifigkeit (=Elastizität) des Kettenwerks bestimmt werden. Dazu wird bei jeder Stufe die Kraft mit der die Stange vom Fahrdraht nach unten gedrückt wird zusätzlich erfasst.

Das vorgestellte Verfahren ist auf alle Anhubsensoren anwendbar, die den Anhub von der Seite unter einem Winkel ($\beta$) > 0° gegenüber einem zum Gleis senkrecht stehenden Maßstab messen. Alle derartigen Systeme haben den beschriebenen Fehler, der mit den beschriebenen Verfahren kompensiert werden kann.

Bei dem Fehler handelt es sich um den gleichen Parallaxenfehler, der auch beim Ablesen eines Zeigerinstruments unter schrägem Winkel auftritt.

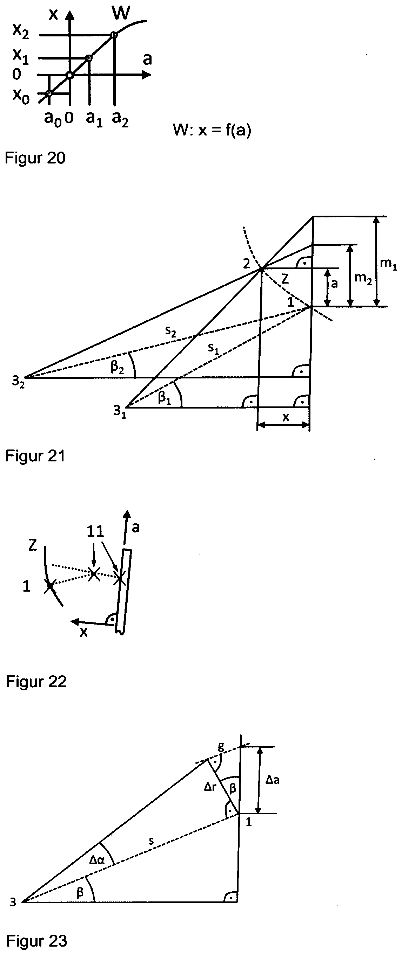

Durch die vorhandene Korrelation des korrekten Anhubs (a) und des gemessenen Anhubs (m) kann die Korrekturfunktion V:a=f(m) aufgestellt werden (siehe Figur 20). Diese Korrekturfunktion kann bei den Messungen verwendet werden, um aus dem gemessenen Anhub (m) den korrekten Anhub (a) zu ermitteln.

Als Funktion kann zum Beispiel eine Interpolationsfunktion verwendet werden. Man kann aber auch eine Ausgleichsfunktion verwenden. Eine Möglichkeit ist zum Beispiel ein Polynom 2. Ordnung.

Der Nachteil dieser Vorgehensweise ist, dass der Anhubsensor bei nachfolgenden Messungen mit dem gleichen Winkel ($\beta$) und dem gleichen Abstand (s) zum Fahrdraht aufgebaut werden muss. Andernfalls muss die Korrekturfunktion (V) neu bestimmt werden.

Auflösen von Gleichung (G 12) nach dem Seitenversatz x liefert:

$$x = d\left(1 - \frac{h+a}{h+m}\right) \qquad\qquad \text{(G 14)}$$

Mit dieser Gleichung kann bei bekanntem Anhub (a) und gemessenem Anhub (m) der Seitenversatz (x) berechnet werden. Die zusätzlich benötigten Parameter (h) und (d) können aus dem gemessenen Winkel ($\beta$) und dem Abstand (s) zum Fahrdraht nach Gleichung (G 9) berechnet werden.

Wendet man die Gleichung (G 14) auf die gemessenen Wertepaare ($a_i$) und ($m_i$) an, so erhält man die neuen Wertepaare ($a_i$) und ($x_i$). Wobei ($x_i$) der Seitenversatz des Fahrdrahts ist. (i) ist dabei der Index des Messpunkts.

Diese Wertepaare kann man benutzen, um die Funktion (W): x=f(a) aufzustellen.

Genauso wie bei der Funktion (V) bestehen mehrere Möglichkeiten die Funktion aufzustellen. Zum Beispiel kann eine Interpolation der Messwerte oder eine Ausgleichsfunktion (z.B. Polynom 2. Ordnung) verwendet werden.

Für beliebige Aufstellungsparameter des Anhubsensors kann jetzt nach Gleichung (G 13) aus dem gemessenen Anhub (m) der korrekte Anhub (a) berechnet werden.

Führt man diese Berechnung für alle Messwerte durch, so kann man die in (Figur 20) gezeigte Korrekturfunktion für die neuen Aufstellungsparameter des Anhubsensors bestimmen.

Dies bietet den Vorteil, dass die aufwändige Vermessung mit der Anhubstange im Gleis nur einmal für jeden Anhubmesspunkt durchgeführt werden muss.

Das Prinzip zur Messung des Anhubs mit zwei Kameras ist in Figur 21 gezeigt.

Um den korrekten Anhub (a) zu messen, wenn sich der Fahrdraht um die Strecke (x) zur Seite bewegt, kann man zwei Anhubsensoren benutzen. Die Sensoren müssen den Anhub ($m_{1/2}$) senkrecht zur Gleisebene messen und den Fahrdraht in Ruhelage unter einem unterschiedlichen Winkel ($\beta$) sehen. Zusätzlich müssen die Sensoren auf den gleichen Punkt am Fahrdraht ausgerichtet sein. Die beiden gemessenen Anhubwerte $m_{1/2}$ müssen auch zeitlich korreliert sein. Dazu können zum Beispiel charakteristische Punkte im Anhubverlauf, wie der maximale Anhub, verwendet werden.

Eine andere Möglichkeit besteht darin, den Signalverlauf der beiden Sensoren über Kreuzkorrelation zusammenzuführen.

Man kann auch mit Zeitstempeln arbeiten um die Messdaten zu synchronisieren.

Wegen des unterschiedlichen Winkels (β) messen die Sensoren einen unterschiedlichen Anhub (m).

Stellt man die Gleichung (G 14) für die beiden Sensoren auf und setzt die beiden Gleichungen gleich, so erhält man folgende Gleichung:

$$d_1 \left(1 - \frac{h_1 + a}{h_1 + m_1}\right) = d_2 \left(1 - \frac{h_2 + a}{h_2 + m_2}\right) \qquad \text{(G 15)}$$

Dabei bezeichnet der Index den jeweiligen Sensor. Durch Einsetzen der folgenden Variablen

$$hm_1 = h_1 + m_1 \; ; \; hm_2 = h_2 + m_2 \qquad \text{(G 16)}$$

wird daraus:

$$d_1 \left(1 - \frac{h_1 + a}{hm_1}\right) = d_2 \left(1 - \frac{h_2 + a}{hm_2}\right) \qquad \text{(G 17)}$$

Auflösen nach dem gesuchten Anhub (a) liefert:

$$a = \frac{(d_1 - d_2)\, hm_1\, hm_2 - d_1\, h_1\, hm_2 - d_2\, h_2\, hm_1}{d_2\, hm_1 - d_1\, hm_2} \qquad \text{(G 18)}$$

mit $hm_1 = h_1 + m_1$; $hm_2 = h_2 + m_2$

Mit Gleichung (G 18) kann bei Anwendung der gezeigten Messanordnung der korrekte Anhub (a) mit mindestens zwei Anhubsenoren gemessen werden. Dabei sollte sich der Neigungswinkel (β) möglichst stark unterscheiden. Weil sich die Winkel dann stärker unterscheiden, ist es besonders vorteilhaft, wenn sich die Sensoren auf unterschiedlichen Seiten des Gleises befinden.

Die Genauigkeit kann gesteigert werden, indem mehr als 2 Sensoren verwendet werden. Dann können die Messergebnisse mit einem geeigneten Verfahren fusioniert werden. Zum Beispiel kann eine geometrische Mittelwertbildung vorgenommen werden.

Vorteilhaft ist es auch Anhubsensoren mit möglichst geringen systematischen Messfehlern einzusetzen. Dazu sollten möglichst wenige Näherungen bei den Berechnungen verwendet werden. Dies liegt daran, dass die Bahnkurve aus den Messunterschieden berechnet wird. Diese Unterschiede sind relativ klein gegenüber dem Messsignal. Unterschiedliche systematische Messfehler der Sensoren führen schnell zu einem zu großen Fehler bei der Berechnung der Bahnkurve (Z) und damit beim korrekten beim Anhub (a).

Die Messung mit mehreren Sensoren hat den Vorteil, dass der korrekte Anhub (a) bei beliebigen Bahnkurven des Fahrdrahts, die nicht zeitinvariant[2] sein müssen vermessen werden können. Der Nachteil ist der größere Aufwand beim Aufstellen der Sensoren und bei der Auswertung der Messdaten.

Anmerkung: Das beschriebene Verfahren zur Bahnberechnung stellt eine Abwandlung der bekannten Stereotriangulation für Zeilenkameras dar.

Ist der Bahnverlauf bei jeder Messung gleich, so kann der nach Gleichung (G 18) berechnete Anhub (a) und ein gemessener Anhub ($m_i$) in Gleichung (G 14) eingesetzt werden. Aus dieser Gleichung erhält man den Seitenversatz (x) das weitere Vorgehen ist analog zu dem beschriebenen Vorgehen.

Um die Messpunkte für die Bahnkurve (Z) zu bekommen, ist ein beliebiger Anhubverlauf ausreichend. Man benötigt keine Kenntnis des tatsächlichen Anhubs. Der Anhub kann zum Beispiel von regulären Zugfahrten herrühren.

Mit dem Bahnverlauf kann die Korrekturfunktion aus der einmal bestimmten Bahnkurve für beliebig aufgestellte Sensoren berechnet werden.

Ein Vorteil der Verwendung der Bahnkurve (Z) besteht darin, dass die Messung mit mehreren Sensoren nur einmalig durchgeführt werden muss. Danach ist ein Anhubsensor zur Messung ausreichend.

Eine weitere Möglichkeit besteht darin, die Bahn des Fahrdrahts aus der Geometrie des Stützpunkts in Ruhelage zu berechnen. Das Prinzip ist in Figur 22 gezeigt.

Dazu werden die 3D Koordinaten der Drehpunkte (11) und des Fahrdrahts in Ruhelage (1) verwendet um die Bahnkurze (Z) in den Koordinaten des Anhubs (a) und Seitenversatzes (x) zu berechnen.

Die 3D Koordinaten können zum Beispiel mit Methoden der Stereogrammetrie und mindestens einer Flächenkamera oder mit einem Tachymeter bestimmt werden. Eine andere Möglichkeit ist die Verwendung der Konstruktionsdaten.

Eine vereinfachte Vermessung kann in 2D vorgenommen werden, wenn alle Drehpunkte als in einer Ebene liegend angenommen werden. Dann vereinfachen sich die Messverfahren. Es genügt ein 2D Bild einer Kamera mit bekannter Ausrichtung zur Ebene.

Eine weitere Vereinfachung ergibt sich, wenn man die zwei Punkte, den Fahrdraht in Ruhelage (1) und den ersten Drehpunkt (11) verwendet, und die Bahn durch einen Kreis annähert. Diese Näherung ist nach Erfahrung des Autors nicht ausreichend um die Messgenauigkeit nach EN 50317 zu erreichen.

Die Geometrie von mindestens zwei aufeinanderfolgenden Stützpunkten kann verwendet werden, um die Bahnkurve eines dazwischen liegenden Messpunkts zum Beispiel in Feldmitte abzuschätzen.

Die Geometrie der Bahnkurve fällt auch bei der Simulation der Fahrleitung während der Konstruktionsphase an.

Die Bahnkurve kann auch mit einer Filmkamera und Stereogrammetrie während der Bewegung der Fahrleitung vermessen werden.

Dazu wird ein eindeutig identifizierbarer Punkt des Fahrdrahts (1) von der Ruhelage ausgehend zeitlich verfolgt und vermessen.

Es kann zum Beispiel ein Stereokamerasystem mit synchroner Bildaufnahme der zwei Kameras verwendet werden.

Bei den Bahnnormen wie zum Beispiel der EN 50317 ist die Toleranz des eingesetzten Messsystems bei den festgelegten Grenzwerten berücksichtigt. Dabei wird eine Annahme über die Genauigkeit des Messsystems getroffen. Der Vorteil dieser Vorgehensweise ist, dass sich der Benutzer des Messsystems keine Gedanken über die Anpassung Grenzwerte an die Messgenauigkeit machen muss.

In EN 50317 geht man davon aus, dass das Anhubmesssystem eine Genauigkeit von 5mm aufweist. Kann man diese Genauigkeit nicht einhalten, so müssen die angewendeten Grenzwerte verschärft werden. Das hat zur Folge, dass dann höhere Anforderungen an den Prüfling (der Stromabnehmer oder das Kettenwerk) zu stellen sind. Dies ist insbesondere bei Mehrfachtraktionsanordnungen schwer zu erfüllen.

Setzt man ein Messsystem ein, dass eine höhere Genauigkeit als die in der Norm geforderte Genauigkeit hat, so können die Grenzwerte nach oben angehoben werden und die Anforderungen an den Prüfling sinken.

Für ein nach DE 10 2006 031 487 B4 211.06.16 gebautes Anhubmesssystem heißt das, dass das Messgerät entweder fast waagrecht auf den Fahrdraht schauen muss oder dass die Anforderungen an den Stromabnehmer des zuzulassenden Fahrzeugs steigen. Von einem genauen Messsystem profitiert der Auftraggeber der Messung, weil er keine so hohen Anforderungen erfüllen muss, um die Norm nach der geprüft wird einzuhalten.

Das erfindungsgemäße Messverfahren hat folgende Unterschiede gegenüber dem bekannten Stand der Technik:

- Die Seitenbewegung des Fahrdrahts wird während der Messung berücksichtigt.
- Eine Seitenauslenkung des Fahrdrahts führt nicht zu einem Messfehler
- Es wird kein Referenzobjekt an der Strecke benötigt
- Das neue Verfahren benutzt keine Näherungen. Dadurch werden unnötige Messfehler vermieden.
- Die Überhöhung des Gleises wird berücksichtigt.
- Durch einen Drehtisch kann der Anhub an mehreren Gleise mit einem Anhubmessgerät gemessen werden.
- Durch eine kombinierte Auswerte- und Steuereinheit ist die synchrone Ansteuerung mehrerer Anhubmessgeräte möglich. Der Aufwand zum Einmessen der Messgeräte entsteht nur einmal pro Gleis.
- Werden mehrere Anhubmessgeräte verwendet, kann die Geschwindigkeit des Zugs gemessen werden.
- Der Einsatz des Messgeräts ist auch bei Nacht möglich. Dies wird durch Beleuchtung erreicht.
- Das Erfassen des Stromabnehmerdurchgangs aus einem Zeilensignal ist möglich
- Es ist möglich, die Steifigkeit des Stützpunkts ohne Arbeiten im Gleis zu bestimmen.

Es ist vorteilhaft die Auslegung des Anhubsensors mit Reserven auszulegen. Dies erleichtert das Einjustieren des Sensors. Bei zu enger Auslegung könnte es passieren, dass durch kleine Fertigungs- oder Messtoleranzen ein Einsatz am vorgesehenen Messpunkt nicht möglich ist. Insbesondere bei einer mobilen Messanlage ist es wichtig die Auslegung so vorzunehmen, dass ein großer Bereich von Aufstellungsparametern, wie zum Beispiel Messabständen (s) und Neigungswinkeln ($\beta$) abgedeckt werden kann. Deshalb kann der Seitenversatz des Fahrdrahts bei der Auslegung des Sensors vernachlässigt werden. Dann gilt:

$$x = y = 0\ mm \tag{G 19}$$

Der mindestens nötige Öffnungswinkel des Anhubsensors $\alpha_{min}$ ergibt sich bei minimal vorgesehenem Abstand ($s_{min}$) und waagerechter Kameraausrichtung ($\beta$=0°). $a_{max}$ ist der maximal zu messende Anhub:

$$\alpha_{min} = 2\ \arctan\left(\frac{a_{max}}{2\ s_{min}}\right) \tag{G 20}$$

Der Winkelsensor soll für einen Mindestabstand von $s_{min}$=9 m ausgelegt werden. Der minimale Messbereich soll 200mm bettragen. Dann beträgt der maximal erforderliche Öffnungswinkel des Sensors $\alpha_{max}$=1,3°.

Bei Einsatz einer Kamera beträgt die maximal zulässige Brennweite ($f_{max}$):

$$f_{max} = \frac{u}{2\ \tan\left(\frac{\alpha_{min}}{2}\right)} \tag{G 21}$$

(u) ist hier die Sensorhöhe in mm. Bei einer Pixelgröße von 4,65$\mu$m und 1024 Bildpunkten beträgt die Sensorhöhe u = 4,8mm. Setzt man diese Höhe und den mindestens benötigten Öffnungswinkel in Gleichung (G 21) ein so erhält man für die maximal mögliche Brennweite $f_{max}$=214 mm

Das mindestens erforderliche Auflösungsvermögen ($\Delta\alpha$) des Anhubsensors ergibt sich, wenn der Sensor mit maximal vorgesehener Neigung ($\beta_{max}$) und maximal vorgesehenem Abstand ($s_{max}$) aufgestellt wird. Zur Betrachtung der geometrischen Verhältnisse wird Figur 23 verwendet. Um die mathematischen Betrachtungen zu vereinfachen, wurde die Annahme gemacht, dass die Gerade (g) parallel zu (s) verläuft. Dies führt zu keinem wesentlichen Fehler weil der Abstand (s) wesentlich größer als ($\Delta r$) und der Winkel ($\Delta\alpha$) sehr klein ist. Es gilt:

$$\Delta\alpha \ll \arctan\left(\frac{\Delta r}{s}\right) = \arctan\left(\frac{\Delta a_{max}\cos(\beta_{max})}{s_{max}}\right) \approx \frac{\Delta a_{max}\cos(\beta_{max})}{s_{max}} \tag{G 22}$$

Da ($\Delta\alpha$) sehr klein ist gilt $\tan(\alpha) \approx \alpha$ wobei $\alpha$ im Bogenmaß gemessen wird.

$\Delta a$ ist die mindestens erforderliche Messgenauigkeit für die Anhubmessung. Laut EN50317 beträgt der zulässige gesamte Fehler bei der Anhubmessung 5 mm. Um für andere nicht korrigierbare Fehler genug Reserven zu haben ist es sinnvoll 1/5 dieses zulässigen Gesamtfehlers für das Auflösungsvermögen des Anhubsensors zu verwenden ($\Delta a_{max}$=1 mm). Der maximale Abstand bei dem der Anhubsensor eingesetzt werden soll beträgt $s_{max}$=20 m und maximale Neigungswinkel beträgt $\beta_{max}$=30°. Setzt man diese Werte in Gleichung (G 22) ein, so errechnet sich die mindestens erforderliche Winkelauflösung zu $\Delta\alpha \ll 2{,}5\ 10^{-3}$°.

Wird eine Kamera als Winkelsensor verwendet, errechnet sich über das mindestens erforderliche Auflösungsvermögen ($\Delta\alpha$) und die Größe der Bildpunkte ($\Delta u$) vom eingesetzten Bildsensor die mindestens erforderliche Brennweite des eingesetzten Objektivs.

$$f_{min} = \frac{\Delta u}{\tan(\Delta\alpha)} \tag{G 23}$$

Setzt man in Gleichung (G 23) $\Delta\alpha$=2,5 $10^{-3}$ ° und $\Delta u$=4,65$\mu$m ein, so erhält man $f_{min}$ = 107 mm.

Anmerkung: Nutzt man den Helligkeitsverlauf des Bildes aus, so kann die Auswertung genauer als 1 Bildpunkt erfolgen.

Im aufgeführten Beispiel muss die Brennweite zwischen $f_{min}$ = 107 mm (G 21) und $f_{max}$ = 214 mm (G 23).gewählt werden. Zum Beispiel kann man eine feste Brennweite von 135 mm verwenden. Bei der erfindungsgemäßen Anlage wurde eine Brennweite von 105 mm gewählt. Damit liegt man unter den getroffenen Annahmen am unteren Ende des nötigen Auflösungsvermögens.

Wird die Kamera in der geschilderten Art und Weise kalibriert, muss die Winkelverstelleinrichtung eine wesentlich größere einseitige Winkelwiederholgenauigkeit, als in Gleichung (G 22) berechnet, haben. Dann wird die Messgenauigkeit nicht signifikant verschlechtert. Die erfindungsgemäß eingesetzte Winkelverstelleinrichtung hat eine einseitige Wiederholgenauigkeit von 1,15x10$^{-3}$ °. Das kleinste Inkrement (Schrittweite) beträgt 0,2x10$^{-3}$. Nach Gleichung (G 22) muss die Genauigkeit besser als 1,15x10$^{-3}$ ° sein. Deshalb kann diese Messanordnung für das beschriebene Kalibrierverfahren verwendet werden.

**Liste der verwendeten Bezugzeichen**

0 - Messdaten für Fahrdrahtposition in Ruhelage
1 - Fahrdraht in Ruheposition
2 - Fahrdraht in Anhubposition
3 - Strahlenzentrum von (A)
$3_{1/2}$ - Strahlenzentrum von Anhubsensor 1 bzw. 2
4 - Fahrdraht
5 - Fremdobjekt zum Beispiel Tragseil
6 - Bereich frei von Fremdkörpern
7 - Anfangsbereich des Anhubverlaufs (Ruhelage)
8 - Linke Kanten
9 - Rechte Kanten
10 - Punkt, der den Fahrdraht verdeckt
11 - Drehpunkte
A - Winkelsensor zur Anhubmessung (a)
Ae - Ablenkeinheit
B - Vorrichtung zum Aufstellen des Sensors (Stativ)
BE - Bildebene
C - Winkelmesser zur Erfassung der Neigung
D - Entfernungsmesser / Detektor
E - Neigungsverstelleinrichtung (Drehtisch)
F - Filter
G - Auswerte- und Steuereinheit
GE - Gerade in der sich die Ebenen SE, OE und BE schneiden
H1, H2 - Anhubmessgerät 1, 2
Hi - Originalhelligkeit
Ho - Helligkeit mit stärkerem Kontrast
L - Strahlungsquelle
L1, L2 - Gleis 1, 2
L1 - Strahl Messpunkt Gleis 1
L2 - Strahl Messpunkt Gleis 2
M - Statisches Objekt
Ma - Mast
Ms - Charakteristisches Merkmal des statischen Objekts (M)
O - Messdaten für Fahrdrahtposition in Ruhelage
OE - Objektebene
P - Stromabnehmer (Pantograph)
Q - Ausgangssignal des Winkelsenors A
R - Verlauf der Kalibrierfunktion
S - Stufen zur Höhenverstellung der Stange
S1 - Originalhelligkeitsverlauf
S2 - tiefpassgefilterte Helligkeit
S3 - Schwellwertverlauf
SE - Sensorebene
SO - Schienenoberkante
Sp - Scheinwerfer (optional)
Sp1 - Scheinwerfer 1
Sp2 - Scheinwerfer 2
St - Strahlteiler
$T_1$ - Teleskopstange
$T_2$ - Isolator (optional)

$T_3$ - Vorrichtung zur Befestigung der Teleskopstange am Fahrdraht

U - Stufenauflage

V - funktionaler Zusammenhang zwischen m und a

W - funktionaler Zusammenhang zwischen a und x

WA - Waagerechte

Z - Bahnkurve des Fahrdrahtes während Anhub

Ze - Zeile die zur Messung des Anhubs verwendet wird

a - Korrekter Anhub des Fahrdrahts senkrecht zur Gleisebene

$a_s$ - gemessener Anhub ohne Berücksichtigung der Gleisüberhöhung

$a_{0/1/2}$ - Stufenhöhe; entspricht dem korrekten, erzeugten Anhub

b - Senkrechter Abstand Strahlenzentrum - Sensor

d - Horizontaler Abstand zwischen Brennpunt und Fahrdraht in Ruhelage

g - Gerade die parallel zu s verläuft

h - vertikaler Abstand Brennpunkt und Fahrdraht in Ruhelage

hs - Helligkeit des reflektierten Signals

hi - Original Helligktie

ho - Helligkeit mit stärkerem Kontrast

$m_{0/1/2}$ - Gemessener Anhub

r - Schwellwertbereich

s - Abstand zwischen Brennpunkt (3) und Fahrdraht in Ruhelage (1).

t - Zeitverlauf

u - Spaltenkoordinate

$u_0$ - Hauptpunkt der Kamera

$u_i$ - Pixelkoordinate des Punkts an dem der Strahl $_i$ auf den Sensor trifft

v - Zeilenkoordinate

x - Seitenversatz

$x_{0/1/2}$ - berechneter Seitenversatz

y - Messfehler des Anhubs

$\alpha$ - Winkelunterschied der Strahlen zwischen Ruhelage und Anhublage

$\Delta a$ - Mindestens erforderliche Messgenauigkeit für die Anhubmessung

$\Delta r$ - Hilfsabstand zur Berechnung des Auflösungsvermögens

$\Delta\alpha$ - Maximal zulässige Winkelabweichung

$\beta$ - Winkel zwischen Gleisebene und Fahrdraht in Ruhelage

$\beta$ - Winkel unter dem der Fahrdraht vom Punkt 3 gegenüber einer Parallelen zu SO: in Ruhelage erscheint

$\beta_{1/2}$ - Winkel unter dem die Sensoren den Fahrdraht sehen

$\varphi$ - Winkel der Messfehler bestimmt ($\varphi = \alpha + \beta$)

$\gamma$: Neigung des Gleises gegenüber der Horizontalen

$\delta$: Neigung des Winkelsensors zur Horizontalen

$\phi$ - Winkel, der Messfehler bestimmt

$\xi$ - Drehwinkel des Sensors

$\omega$ - Winkel des Strahls

$\omega_i$ - Winkel des Strahls zur optischen Achse des Sensors

## Patentansprüche

1. Verfahren zur Messung des Anhubs elektrischer Fahrleitungen auf Fahrwegen des schienengebundenen Verkehrs, wobei die Messung mit Hilfe einer optischen Erfassung durchgeführt wird, wobei ein vorkalibrierter Winkelsensor (A) verwendet wird, **dadurch gekennzeichnet, dass**

   • unter Verwendung des Winkelsensors (A) ein Anhubmessgerät (H 1/2) zwischen Fahrdraht (1) und Gleisebene (L 1/2) positioniert wird, wobei die Seitenbewegung des Fahrdrahts x vorab für den gesamten Messbereich vorab in Abhängigkeit vom gemessenen Anhub (m) bestimmt wurde (x=f(m)) und der Anhub a nach der Beziehung

$$a = (h + m)\left(1 - \frac{x}{d}\right) - h$$

ermittelt wird, wobei

h = s sin(β)- vertikaler Abstand zwischen Brennpunkt und Fahrdraht (1) in Ruhelage

m = d tan(α+β) - h - gemessener Anhub

x = f(m) - Seitenversatz des Fahrdrahtes (1) während des Anhubes

d = s sin(β)- horizontaler Abstand zwischen Brennpunkt und Fahrdraht (1) in Ruhelage

s - Abstand zwischen Brennpunkt (3) und Fahrdraht in Ruhelage (1)

$\alpha = \omega_2 - \omega_1$ - mit dem Winkelsensor gemessene Auslenkung des Fahrdrahts in Anhublage (2) relativ zur Ruhelage (1)

$\omega_1$ - gemessene Winkellage bei Anhublage

$\omega_2$ - gemessene Winkellage in Ruhelage β - Winkel zwischen Gleisebene und Fahrdraht in Ruhelage bedeuten und

die Bahnkurve durch Anheben des Fahrdrahts mit einer Stange und Messen des Sensorsignals (m) oder aus der Stützpunktgeometrie oder mit Hilfe von zwei Kameras und Aufzeichnung einer Bewegung der Fahrdrahtbewegung über den gesamten Messbereich bestimmt wird.

2. Verfahren nach Anspruch 1, *gekennzeichnet dadurch, dass* zur Kalibrierung des Winkelsensors (A) ein entfernungsunabhängiges, beliebiges Objekt über einen hochpräzisen mechanischen Drehtisch mit mindestens 2 Messwerten und einer mindestens erforderlichen Messgenauigkeit, die nach folgender Formel berechnet wird

$$\Delta\alpha \ll arc\tan\left(\frac{\Delta a_{max}\cos(\beta_{max})}{s_{max}}\right) \approx \frac{\Delta a_{max}\cos(\beta_{max})}{s_{max}}$$

$\Delta\alpha$ - Notwendige Winkelgenauigkeit

$\Delta a_{max}$ - maximal tolerierbarer Anhubmessfehler

$\beta_{max}$ - Maximal auftretender Winkel zwischen Gleisebene und Fahrdraht (1) in Ruhelage

$s_{max}$ -Maximal auftretender Abstand zwischen Brennpunkt und Fahrdraht (1) in Ruhelage,

wobei das Ergebnis die Funktion R, die zu jedem Ausgangssignal des Winkelsensors (Q) den Winkel ξ liefert, ergibt.

3. Verfahren nach Anspruch 1 und 2, *gekennzeichnet dadurch, dass* der Winkelsensor (A) an einer Winkelverstelleinrichtung angebracht ist und die Anhubwerte der Fahrleitungen/drähte (1) wahlweise an mehreren Gleisen erfasst werden.

4. Verfahren nach Anspruch 1 bis 3, *gekennzeichnet dadurch, dass* die Auswertung durch Vergleich des zeitlichen Anhubverlaufs mit der Skala erfolgt, wobei das Helligkeitssignal des Winkelsensors (A) für den Messzeitraum jeweils in ein Diagramm eingetragen wird und die Auswertung entweder manuell durch Ablesen der Skala oder durch automatische Auswertung mittels Methoden der automatischen Bildverarbeitung erfolgt, wobei die automatische Auswertung durch dynamische Schwellwertbildung mittels spaltenweiser Subtraktion des tiefpassgefilterten Bildes vom Originalbild und nachfolgende Schwellwertbildung und Auswahl von Bereichen mit der erwarteten Breite durchgeführt wird.

5. Verfahren nach Anspruch 1 bis 4, *gekennzeichnet dadurch, dass* zur Scharfstellung mehrerer Fahrdrähte (1) mit einem unterschiedlichen Abstand zum Winkelsensor das Scheimpflugprinzip angewendet wird.

6. Verfahren nach Anspruch 1 bis 5, *gekennzeichnet dadurch, dass* bei einem Stromabnehmerdurchgang der Anhub durch eine Ausgleichsfunktion aus den Messwerten vor und nach einem Durchgang extrapoliert wird, wobei der Stromabnehmerdurchgang bei automatischer Auswertung als Unstetigkeit im Helligkeitsverlauf erkannt wird und die Extrapolation aus dem Signalverlauf in der nahen Umgebung vor und nach der Unstetigkeit mit Hilfe einer geeigneten mathematischen Funktion wie zum Beispiel einem Polynom 2. Ordnung oder einer kubischen Splinefunktion erfolgt und bei manueller Auswertung die Extrapolation per Augenschein erfolgt.

7. Verfahren nach Anspruch 1 bis 6, *gekennzeichnet dadurch, dass* die Winkel der Sensoreinstellungen gegenüber der Gleisebene bestimmt werden.

**8.** Verfahren nach Anspruch 1 bis 7, *gekennzeichnet dadurch, dass* mittels mindestens eines Scheinwerfers auch Nachtfahrten vermessen werden, wobei der Scheinwerfer vorteilhafterweise auf der Winkelverstelleinrichtung montiert wird oder einen Öffnungswinkel der mehrere Gleise abdeckt aufweist.

**9.** Verfahren nach Anspruch 1 bis 8, *gekennzeichnet dadurch, dass* die Auswertung des Rohsignals des Winkelsensors (A) kontinuierlich durchgeführt wird.

**10.** Verfahren nach Anspruch 1 bis 9, *gekennzeichnet dadurch, dass* die Signalaufzeichnung vor dem Stromabnehmerdurchgang gestartet, die Signale zwischengespeichert (normaler Puffer) und die Auswertung nach dem Stromabnehmerdurchgang durchgeführt wird.

**11.** Verfahren nach Anspruch 1 bis 10, *gekennzeichnet dadurch, dass* die Signalaufzeichnung vor, während oder nach dem Stromabnehmerdurchgang gestartet, die Signalaufzeichnung kontinuierlich in einen Ringspeicher durchgeführt und die Auswertung nach dem Stromabnehmerdurchgang realisiert und nach dem Startsignal gestartet wird.

**12.** Verfahren nach Anspruch 1 bis 11, *gekennzeichnet dadurch, dass* die Auswertung des Anhubs manuell durch Ablesen der aneinandergefügten Bildzeilen oder automatisch durch Methoden der maschinellen Bildverarbeitung durchgeführt wird wobei die jeweils interessierenden Messgrößen wie zum Beispiel der maximale Anhub oder der Anhub bei jedem Stromabnehmerdurchgang ausgewertet werden.

**13.** Verfahren nach Anspruch 1 bis 12, *gekennzeichnet dadurch, dass* im Rahmen der Bildverarbeitung das Helligkeitssignal tiefpassgefiltert sowie alle Bereiche ausgewählt werden, die dunkler als das gefilterte Signal sind.

## Claims

**1.** Method for measuring the uplift of electrical contact lines on railway lines, wherein the measurement is performed by means of visual detection, wherein a precalibrated angle sensor (A) is used, *characterised in that*

- by using the angle sensor (A) an uplift measuring device (H 1/2) is positioned between the contact wire (1) and track plane (L 1/2), wherein the lateral movement of the contact wire x has been determined in advance for the whole measurement area as a function of the measured uplift (x = f(m)) and the uplift a is determined according to the relationship

$$a = (h + m)\left(1 - \frac{x}{d}\right) - h$$

wherein

$h = s \sin(\beta)$ - vertical distance between focal point and contact wire (1) in a position of rest
$m = d \tan(\alpha + \beta)$ - measured uplift
$x = f(m)$ - lateral offset of the contact wire (1) during the uplift
$d = s \sin(\beta)$ - horizontal distance between the focal point and contact wire (1) in a position of rest
$s$ - distance between the focal point (3) and contact wire in a position of rest (1)
$\alpha = \omega_2 - \omega_1$ - deflection of the contact wire measured by the angle sensor in uplift position (2) relative to the position of rest (1)
$\omega_1$ - measured angular position in uplift position
$\omega_2$ - measured angular position in a position of rest
$\beta$ - angle between the track plane and contact wire in a position of rest and
the trajectory is determined by lifting the contact wire with a rod and measuring the sensor signal (m) or from the support point geometry or by means of two cameras and recording a movement of the contact wire movement over the whole measurement area.

**2.** Method according to claim 1, *characterised in that* for calibrating the angle sensor (A) any object independent of distance is calculated by a highly precise mechanical rotary table with at least 2 measurement values and a minimum required measurement accuracy which is calculated according to the following formula

$$\Delta\alpha \ll \arctan\left(\frac{\Delta a_{max}\cos(\beta_{max})}{s_{max}}\right) \approx \frac{\Delta a_{max}\cos(\beta_{max})}{s_{max}}$$

$\Delta\alpha$ - required angle precision

$\Delta a_{max}$ - maximum tolerated uplift measurement error

$\beta_{max}$ - maximum angle between the plane of the track and the contact wire (1) in a position of rest

$s_{max}$ - maximum distance between the focal point and contact wire (1) in a position of rest,

wherein the result gives the function R which delivers the angle $\xi$ for each output signal of the angle sensor (Q).

3. Method according to claim 1 and 2, *characterised in that* the angle sensor (A) is attached to an angle adjusting device and the uplift values of the contact lines/wires (1) are detected optionally on a plurality of rails.

4. Method according to claim 1 to 3, *characterised in that* the evaluation is performed by comparing the temporal uplift path with the scale, wherein the brightness signal of the angle sensor (A) for the measurement period is entered into a diagram and the evaluation is either performed manually by reading the scale or by automatic evaluation using methods of automatic image processing, wherein the automatic evaluation is performed by dynamic threshold formation by means of column subtraction of the low-pass filtered image from the original image and subsequent threshold formation and selection of areas with the expected width.

5. Method according to claim 1 to 4, *characterised in that* the Scheimpflug principle is used for focusing a plurality of contact wires (1) with a different distance from the angle sensor.

6. Method according to claim 1 to 5, *characterised in that* with a current collector pass the uplift is extrapolated by a balancing function from the measurement values before and after a pass, wherein the current collector pass is identified with an automatic evaluation as a discontinuity in the brightness curve and the extrapolation is performed from the signal curve in the immediate environment before and after the discontinuity by means of a suitable mathematical function such as for example a polynomial of the second order or a cubic spline function and with a manual evaluation the extrapolation is performed by visual inspection.

7. Method according to claim 1 to 6, *characterised in that* the angles of the sensor settings are determined relative to the track plane.

8. Method according to claim 1 to 7, *characterised in that* night journeys are also measured by means of at least one headlight, wherein the headlight is preferably mounted on the angle adjusting device or has an opening angle which covers a plurality of tracks.

9. Method according to claim 1 to 8, *characterised in that* the evaluation of the raw signal of the angle sensor (A) is performed continuously.

10. Method according to claim 1 to 9, *characterised in that* the signal recording is started before the current collector pass, the signals are stored temporarily (normal buffer) and the evaluation is performed after the current collector pass.

11. Method according to claim 1 to 10, *characterised in that* the signal recording is started before, during or after the current collector pass, the signal recording is performed continuously in a ring memory and the evaluation is performed after the current collector pass and is started after the start signal.

12. Method according to claim 1 to 11, *characterised in that* the evaluation of the uplift is performed manually by reading the joined image lines or automatically by methods of machine image processing, wherein the measured values of interest such as for example the maximum uplift or the uplift are evaluated with each current collector pass.

13. Method according to claim 1 to 12, *characterised in that* as part of the image processing the brightness signal is low-pass filtered and all areas are selected which are darker than the filtered signal.

**Revendications**

1. Procédé de mesure du levage de caténaires électriques sur des voies de la circulation sur rails, dans lequel la mesure est réalisée à l'aide d'une détection optique,

   dans lequel

   un capteur d'angle précalibré (A) est utilisé, **caractérisé en ce que**

   - un appareil de mesure de levage (H 1/2) est positionné entre le fil de contact (1) et le plan de voie (L 1/2) en utilisant le capteur d'angle (A), dans lequel le mouvement latéral du fil de contact x a été déterminé au préalable pour l'ensemble de la plage de mesure au préalable en fonction du levage mesuré (m) (x=f(m)) et le levage a est déterminé d'après la relation

   $$a = (h + m)\left(1 - \frac{x}{d}\right) - h$$
   ,

   dans lequel

   h = s sin(β) - distance verticale entre le foyer et le fil de contact (1) en position de repos
   m = d tan(α+β) - h - levage mesuré
   x = f(m) - décalage latéral du fil de contact (1) pendant le levage
   d = s sin(β) - distance horizontale entre le foyer et le fil de contact (1) en position de repos
   s - distance entre le foyer (3) et le fil de contact en position de repos (1)
   a = $\omega_2$ - $\omega_1$ - déviation mesurée avec le capteur d'angle du fil de contact en position de levage (2) par rapport à la position de repos (1)
   $\omega_1$ - position angulaire mesurée en position de levage
   $\omega_2$ - position angulaire mesurée en position de repos
   β - angle entre le plan de voie et le fil de contact en position de repos et
   la trajectoire est déterminée par levage du fil de contact avec une barre et mesure du signal du capteur (m) ou à partir de la géométrie de point de repère ou à l'aide de deux caméras et enregistrement d'un déplacement du mouvement de fil de contact sur l'ensemble de la plage de mesure.

2. Procédé selon la revendication 1, **caractérisé en ce que** pour le calibrage du capteur d'angle (A), un objet quelconque, indépendant de la distance est calculé par le biais d'une table tournante mécanique haute précision avec au moins 2 valeurs de mesure et une précision de mesure minimum nécessaire, selon la formule suivante

   $$\Delta a \ll arc \tan\left(\frac{\Delta a_{max} \cos(\beta_{max})}{s_{max}}\right) \approx \frac{\Delta a_{max} \cos(\beta_{max})}{s_{max}}$$

   $\Delta\alpha$ - précision angulaire nécessaire
   $\Delta a_{max}$ - erreur de mesure de levage maximum tolérable
   $\beta_{max}$ - angle maximum apparaissant entre le plan de voie et le fil de contact (1) en position de repos
   $s_{max}$ - distance maximum apparaissant entre le foyer et le fil de contact (1) en position de repos,
   dans lequel le résultat donne la fonction R, qui fournit l'angle ξ pour chaque signal de sortie du capteur d'angle (Q).

3. Procédé selon la revendication 1 et 2, **caractérisé en ce que** le capteur d'angle (A) est monté au niveau d'un dispositif de réglage d'angle et les valeurs de levage des caténaires/fils de contact (1) sont détectées au choix sur plusieurs voies.

4. Procédé selon la revendication 1 à 3, **caractérisé en ce que** l'évaluation se fait par comparaison de la courbe de levage dans le temps avec l'échelle, dans lequel le signal de luminosité du capteur d'angle (A) est porté respectivement dans un diagramme pour la période de mesure et l'évaluation se fait soit manuellement par lecture de l'échelle soit par évaluation automatique au moyen de méthodes du traitement d'image automatique, dans lequel l'évaluation automatique est réalisée par formation de valeur seuil dynamique par soustraction par colonne de l'image filtrée passe-bas de l'image d'origine et formation de valeur seuil suivante et sélection de zones avec la largeur attendue.

**5.** Procédé selon la revendication 1 à 4, *caractérisé en ce que* le principe de Scheimpflug est appliqué pour la mise au point de plusieurs fils de contact (1) avec une distance différente par rapport au capteur d'angle.

**6.** Procédé selon la revendication 1 à 5, *caractérisé en ce que* lors d'un passage de pantographe, le levage est extrapolé par une fonction d'équilibrage à partir des valeurs de mesure avant et après un passage, dans lequel le passage de pantographe est détecté en cas d'évaluation automatique en tant qu'instabilité dans la courbe de luminosité et l'extrapolation se fait à partir de la courbe de signaux à proximité immédiate avant et après l'instabilité à l'aide d'une fonction mathématique appropriée comme par exemple un polynôme de second degré ou une fonction spline cubique et en cas d'évaluation manuelle l'extrapolation se fait par examen visuel.

**7.** Procédé selon la revendication 1 à 6, *caractérisé en ce que* les angles des réglages de capteur sont déterminés par rapport au plan de voie.

**8.** Procédé selon la revendication 1 à 7, *caractérisé en ce que* des trajets de nuit sont également dimensionnés au moyen d'au moins un projecteur, dans lequel le projecteur est monté de manière avantageuse sur le dispositif de réglage d'angle ou présente un angle d'ouverture qui couvre plusieurs voies.

**9.** Procédé selon la revendication 1 à 8, *caractérisé en ce que* l'évaluation du signal brut du capteur d'angle (A) est réalisé en continu.

**10.** Procédé selon la revendication 1 à 9, *caractérisé en ce que* l'enregistrement de signal est lancé avant le passage de pantographe, les signaux sont enregistrés temporairement (tampon normal) et l'évaluation est réalisée après le passage de pantographe.

**11.** Procédé selon la revendication 1 à 10, *caractérisé en ce que* l'enregistrement de signal est lancé avant, pendant ou après le passage de pantographe, l'enregistrement de signal est réalisé en continu dans une mémoire circulaire et l'évaluation est réalisée après le passage de pantographe et est lancée après le signal de démarrage.

**12.** Procédé selon la revendication 1 à 11, *caractérisé en ce que* l'évaluation du levage est réalisée manuellement par lecture des lignes d'image jointes l'une à l'autre ou automatiquement par des méthodes du traitement d'image par machine dans lequel les grandeurs de mesure respectivement intéressantes comme par exemple le levage maximum ou le levage sont évaluées à chaque passage de pantographe.

**13.** Procédé selon la revendication 1 à 12, *caractérisé en ce que* dans le cadre du traitement d'image, le signal de luminosité est filtré passe-bas et toutes les zones qui sont plus foncées que le signal filtré sont sélectionnées.

Figur 1

Figur 2 a

Figur 2 b

Figur 3

Figur 4

Figur 5

Figur 6

Figur 7

Figur 8

Figur 9

Figur 10

Figur 11

Figur 12

Figur 13

Figur 14

Figur 15

Figur 16

Figur 17

Figur 18

V: a=f(m)

Figur 19

Figur 20

Figur 21

Figur 22

Figur 23

**IN DER BESCHREIBUNG AUFGEFÜHRTE DOKUMENTE**

**In der Beschreibung aufgeführte Patentdokumente**

- DE 102006031487 B4